# EUROPEAN PATENT SPECIFICATION

(11) **EP 1 362 655 B1**
(45) Date of publication and mention of the grant of the patent: **03.05.2006**
(21) Application number: 03018152.3
(22) Date of filing: 12.07.2000
(51) Int. Cl.: B23B 51/00

(54) **Drill Bit for Working Undercut Hole**
Bohrer zum Bohren unterschnittener Löcher
Foret pour le perçage de trous chambrés

(30) Priority: 21.07.1999 JP 20562999; 10.08.1999 JP 22595499
(43) Date of publication of application: 19.11.2003
(62) Divisional of application: 00944409.2
(73) Proprietor: Kabushiki Kaisha Zen Kenchiku Sekkei Jimusho, Tokyo 107-0061 (JP)
(72) Inventor: Sato, Yoshinori, Setagaya-ku, Tokyo 154-0023 (JP)
(74) Representative: Grünecker, Kinkeldey, Stockmair & Schwanhäusser Anwaltssozietät

(56) References cited:
- EP-A- 0 722 801
- US-A- 4 307 636
- US-A- 4 992 010
- US-A- 5 810 523

## Description

### Technical Field

The present invention relates to improvements in a drill bit for working an undercut hole. More particularly, the present invention relates to a drill bit suitable for drilling an undercut hole which is enlarged into a taper shape in the vicinity of a hole bottom portion of a prepared hole for installing the post-installation anchor.

### Background Art

The most popular conventional fastener of a post-installation type is constituted by a sleeve having an expansion portion and a plug (expanding member) having a taper portion for expanding the expansion portion by being inserted into the sleeve, and is basically arranged to fix the sleeve as an anchor to a concrete structure by hammering the plug or sleeve upon installing the fastener into a prepared hole and by expanding the expansion portion by a relative displacement therebetween.

In a structure of such a conventional fastener, since the sleeve and the plug are merely press-fitted under a non-expanded condition of the expansion portion, they tend to be separated. Specifically, when it is installed upwardly, there is a possibility that the operation ability during the installation is degraded by the detaching of the sleeve. Further, since there is no means for restricting a relative position between the expansion portion and the plug even under a condition that the expansion portion is expanded, slipping out of the plug from the sleeve or detaching of the sleeve from the prepared hole tends to be generated by the generation of the loosening between the sleeve and the plug in the case that it receives earthquake or mechanical vibration energy. This degrades the anchor effect and is not suitable.

On the other hand, as a method for working an undercut hole acting as a prepared hole prior to the installation of the post-installation anchor of an undercut type, there are a one-step method and a two-step method.

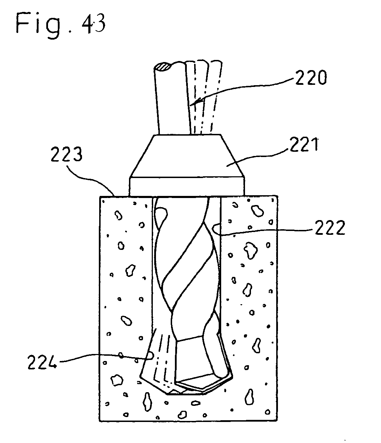

The former one-step method is, as shown in Fig. 43, a method for working an undercut hole 224 by first working a straight prepared hole 222 using a dedicated drill bit 220 installing a stopper 221, and by enlarging a hole bottom portion of the straight prepared hole 222 into a taper shape in a meaner of executing a planetary operation for swinging and rotating the drill bit 220 at the stepper 221 as a fulcrum by several rotations after a depth of the prepared hole 222 reaches a predetermined depth and the stopper 221 is contacted with a concrete surface 223.

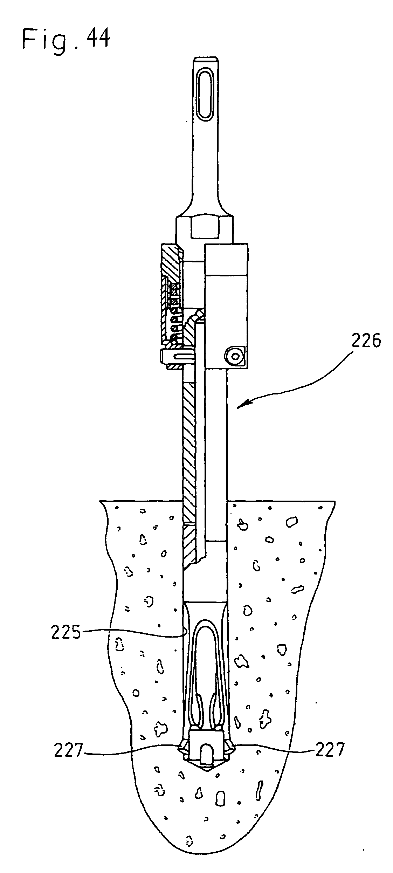

The latter two-step method is, as shown in Fig. 44, a method for enlarging a portion near a hole bottom of a straight prepared hole 225 into a taper shape by first working the straight prepared hole 225 by means of a known working method, by seating a special drill bit 226 for diameter-enlarging operation, and by enlarging a top end of a cutter 227 of the drill bit 226 utilizing a reaction force from the hole bottom against the drill pressing while putting the drill bit 226 at the hole bottom.

However, although the former method can drill an undercut hole by one step, it requires a special operation of executing a planetary operation of the drill bit 220 integrally with an electric drill main body. Therefore, this requires a skill in this drilling operation. If the builder is not skilled in this operation, there will be obliged to degrade an accuracy of a hole working and to generate a breakage of the drill bit. Particularly, there is a drawback that a dispersion as to hole working accuracy is lodged due to individual differences.

Further, the latter method requires two steps as called, and requires to change the drill bit 226 or to change the handling of an electric drill. Therefore, there is a drawback that the steps for working the hole and the operation time are duly elongated.

EP 0 722 801 A discloses a drill with a drill body connected to a sleeve and a collar that are rotated together with a push rod. The rear end of the push rod projects from the collar and is used for attachment to a driving means. The collar is rotatable with respect to the push rod, wherein a L-shaped aperture is used with a corresponding pin placed through this aperture in the push rod, a slot in a sleeve, and an aperture in the collar. Once a cylindrical bore with a predetermined depth is achieved, the collar is rotated until the pin is at the apex of the L-shaped aperture, which allows the pin to move along longitudinal slots in the sleeve when force is supplied to the end of the drill. By this force, the push rod will be moved axially within the sleeve and will force the corresponding arms outward.

### Disclosure of the Invention

The present invention is invented by observing the above-mentioned problems. It is an object of the present invention to provide an undercut working drill bit which is capable of working an undercut hole in high accuracy as a prepared hole with a feeling substantially the same as that in a straight hole working without requiring a special operation in the installation of a post-installation anchor (fastener) of an undercut type.

A fastener of a post-installation anchor type can comprise a sleeve having an expansion portion and a plug having a taper portion for expanding the expansion portion by being installed in the sleeve, wherein the sleeve and the plug are engaged with each other by the convexoconcave engagement so as to prevent a mutual detachment between the sleeve and the plug under the non-expanded condition of the expansion portion, and wherein an inner peripheral surface of the expansion portion and an outer peripheral surface of the plug are again engaged by the convexoconcave engagement when the expansion portion is expanded by a predetermined quantity by hammering the sleeve or the plug.

By expanding the expansion portion through hammering of the sleeve or plug upon inserting the fastener in a predetermined prepared hole, the inner peripheral surface of the expansion portion and the outer peripheral surface of the plug are again engaged by the convexoconcave engagement and substantially the relative position therebetween is executed to prevent the detaching of the sleeve. Therefore, even if it receives earthquake or mechanical vibration energy after the installation, no loosening causes between the sleeve and the plug, and the anchor effect is stably maintained for a long term.

The fastener is of an inner cone hammering type in which the plug having a length shorter than that of the sleeve is previously inserted within a range of the length of the sleeve, a flange portion press-fitted into a prepared hole of an opposite member is formed at an outer periphery of an end portion opposite to the expansion portion in the sleeve, and the plug is hammered by utilizing a friction force between the flange portion and an inner peripheral surface of the prepared hole.

First the sleeve is hammered to the prepared hole, and at this time the flange portion is also hammered to the prepared hole while deforming the flange portion of the sleeve end portion. With this arrangement, a sufficient friction resistance force is generated between an inner peripheral surface of the prepared hole and the sleeve. Under this condition, when the plug in the sleeve is hammered by using the hammering jig, the relative movement between the prepared hole and the sleeve is prevented by the friction resistance force. As a result, the expansion portion is expanded by hammering the plug with respect to the sleeve.

The circumferential groove can be formed from an end surface in the flange portion. An easy deformability of the flange portion at an end portion of the sleeve is further promoted by the existence of this circumferential groove. With this arrangement, for example, even when an opening periphery of the prepared hole is not a complete round, the flange portion is deformed following a shape of the hole and is firmly fitted with an inner periphery of the prepared hole. Therefore, the friction resistance force between the prepared hole and the sleeve, which force is necessary for the plug hammering, is equivalently distributed without offset, and simultaneously this prevents invasion of rain water into the prepared hole.

A fastener of a post-installation anchor type can comprise a sleeve having an expansion portion and an anchor main body portion having a taper portion for expanding the expansion portion by being installed in the sleeve, wherein the anchor main body portion is formed into a stepped-shaft shape member by the plug having a taper portion and a large diameter portion greater in diameter than that of the plug, the plug having an outer diameter generally the same as that of the sleeve has a predetermined relative movement stroke to a step portion of the anchor main body portion and an inner periphery of the expansion portion and an outer peripheral portion of the plug are previously engaged by the convexoconcave engagement so as to prevent the detachment therebetween under a non-expanded condition of the expansion portion, and by hammering the anchor main body portion by the relative movement stroke under the condition that the sleeve is seated to the prepared hole, the large diameter portion of the anchor main body portion is press-fitted to the prepared hole, the expansion portion of the sleeve is expanded, and the inner periphery of the expansion portion is engaged with the outer periphery by the convexoconcave engagement under the expansion condition of the expansion portion.

Accordingly, the expansion portion of the sleeve can be expanded by hammering the anchor main body portion until the sleeve is contacted with the stepped portion of the anchor main body portion after inserting the fastener to the prepared hole. In this case, when the sleeve and the stepped portion are in contact with each other, it becomes impossible to hammer the anchor main body portion further. Therefore, it is possible to recognize that the expansion portion is sufficiently expanded from the feeling of this contact. Simultaneously, when the anchor main body portion is hammered, the large diameter portion of the anchor main body portion is positively press-fitted to the prepared hole. Therefore, by setting the length of the large diameter portion at a long length in some degree and by setting so that a necessary strength is obtained by press fitting the large diameter portion by a minimum necessary quantity, it is not necessary to strictly control the depth of the prepared hole. That is, even if the projecting length of the large diameter portion projecting from the prepared hole is dispersed after the completion of the installation, no problem causes in the strength as an anchor. Further, since the relative movement between the sleeve and the anchor main body portion is prevented by the contact between the sleeve and the stepped portion of the anchor main body portion, the anchor main body portion is not excessively hammered, and this arrangement performs the effect that a dispersion of the installation condition among individuals of builders is suppressed.

A fastener of a post-installation anchor type can comprise a sleeve having an expansion portion and an anchor main body portion having a taper portion for expanding the expansion portion by being installed in the sleeve, wherein the anchor main body portion is formed into a stepped-shaft shape member by the plug having a taper portion and a large diameter portion greater in diameter than that of the plug, the plug having an outer diameter generally the same as that of the sleeve has a predetermined relative movement stroke to a step portion of the anchor main body portion and an inner periphery of the expansion portion and an outer peripheral portion of the plug are previously engaged by the convexoconcave engagement so as to prevent the detachment therebetween under a non-expanded condition of the expansion portion, the inner peripheral surface of the expansion portion and the outer peripheral surface of the plug are engaged by the convexoconcave engagement and the engagement generates a connection feeling when the previous convexoconcave engagement is disengaged according to the hammering of the anchor main body portion by the relative movement stroke and the expansion portion is expanded by a predetermined quantity after the sleeve is inserted to the prepared hole.

That means the large diameter portion of the anchor main body portion has not to be positively press fitted to the prepared hole, and during the hammering of the anchor main body portion to the sleeve, an installation feeling due to the convexoconcave engagement between the expansion portion and the plug is obtained by the contact between the sleeve and the stepped portion of the anchor main body portion resulting from that both reach the stroke ends thereof.

Thus, it becomes possible to easily and actually feel the sufficient expansion of the expansion portion by the predetermined hammering of the anchor main body portion through a completed feeling due to the convexoconcave engagement. It is possible to improve the stability of the installation condition by canceling the dispersion of the installed condition due to the individual difference of builders.

The prepared hole can be of an undercut type in which a portion near a hole bottom portion of the prepared hole is enlarged in diameter into a taper shape.

Since the expansion portion of the sleeve can be further largely expanded into a skirt shape so as to follow the shape of the prepared hole of the undercut type, the strength of the anchor is further improved by a strong anchor effect due to the undercut shape and the multiplier effect due to the convexoconcave engagement between the expansion portion and the plug at the expansion completed time. Particularly, even if cracks are generated in the concrete structure, the sleeve is not detached and performs the extremely strong anchor effect.

Particularly, if a female screw portion or male screw portion is formed at the large diameter portion a predetermined structure can be fixed by using the female screw portion or the male screw portion as a tightening portion.

A deformed reinforcing bar for reinforced concrete can be integrally formed with the large diameter portion of the anchor main body portion in the form of extending therefrom, and a male screw portion can be formed at an intermediate portion between the large diameter portion and the deformed reinforcing bar, and a lock nut can be previously tightened to the male screw portion.

By tightening the lock nut in addition to the anchor effect by the expansion of the expansion portion of the sleeve, the expansion portion and the lock nut substantially press-tighten the concrete structure. Therefore, in case that a deformed reinforcing bar is employed as an insertion bar for earthquake-proof reinforcement, the fastener performs an extremely strong strength (proof stress) against load input in both of the tensile direction and the compressing direction.

The fastener can be a resin fastener.

In case the fastener is employed for fixing a circuit card of electric product and various electronic devices or for installing interior members of an automotive vehicle, a relative positioning between sleeve and plug can be executed by the convexoconcave engagement between the inner peripheral surface of the expansion portion and the outer peripheral surface simultaneously with expanding the expansion portion of the sleeve. Therefore, even if the fastener receives vibrations after the installation thereof, it is difficult to generate loosening between the expansion portion and the plug, and it is possible to keep the anchor effect for long term. On the other hand, since it is superior in a self reversion property as a property of the resin fastener, in case of disengaging the anchor engagement for repairing or recycle, the plug is hammered in the inverse direction to the expansion period to cancel the expansion of the sleeve, and the fastener is easily removed.

A jig for hammering a sleeve or a plug in an installation of such fasteners of a post installation type can comprise a rod constituted by integrally forming a punch portion inserted into a hole of an opposite and a shank portion in a longitudinal direction, and an adjustable adapter installed so as to be slidable to the rod in an axial direction by a predetermined quantity, a deformed flange portion can be integrally formed at a longitudinally center portion of the fastener installation, two engagement grooves, which are engageable with the deformed flange portion and have different in depth with each other, can be formed inside of the adjust adapter with 90° offset in phase, and a projecting length of the punch portion from the adjuster adapter is selectable from two stages by selectively switching an engaged groove to be engaged with the deformed flange portion.

In case such jig is employed in hammering a plug of a fastener of an inner cone hammering type, by alternatively selecting a projection length of a punch portion directly relating to the hammering of the sleeve or plug though it is a dedicated jig, it can be commonly used in the hammering of the sleeve and the plug which are different in the necessary projection length of the punch portion. Further, in some cases, it is possible to commonly use the jig in the hammering of sleeves or plugs of at least two kinds of fasteners having different hammering length, that is, two kinds of fasteners of different sizes. As a result, it becomes possible to decrease the tool control manhour and to improve the flexibility of the jig.

The object is solved by a drill bit according to claim 1.

According to the invention, until a depth of the hole during the drilling reaches a predetermined depth and the stopper sleeve is contacted with a surface of a structure of a drilled object, the cutter blade control means does not operate, and the cutter blades for undercut working are received in the cutter body. Until this time, the prepared hole of a straight hole shape is drilled by at least a cutter blade for straight hole working.

On the other hand, when the cutter body is pressed after the depth of the straight hole in drilling reaches the predetermined depth and the stopper sleeve is contacted with the structure as the drilled object, a relative movement between the cutter body and the stopper sleeve is first started and the cutter blade control means operates. With this operation, the cutter blades for undercut working gradually project in the diametrical direction together with the rotational motion of the drill bit, and therefore, a portion near a hole bottom portion of the prepared hole of the straight hole shape previously worked is enlarged in diameter into a skirt shape and is finished into a undercut hole shape.

Consequently, it is possible to work a necessary undercut hole with a feeling completely the same as that in a normal straight hole drilling operation and by one step without executing complex operations of the drill bit.

With the invention as claimed in claim 2, the control rod installed in the cutter body and the cutter blades for undercut working are engaged with each other by the rack and pinion relationship, the control rod is slidably displaced according to the relative displacement between the stopper sleeve and the cutter body through the cam member, and the cutter blades for undercut is swingingly displaced.

Accordingly, as mentioned above, when the cutter body is pressed after the depth of the straight hole in drilling reaches the predetermined depth and the stopper sleeve is contacted with the structure as the drilled object, a relative movement between the cutter body and the stopper sleeve is first started and the cutter blade control means operates, and the control rod is pushed out with respect to the cutter body through the cam member. Since the rack at the tip end of the control rod and the sector gear of the cutter blades for undercut working are engaged with each other, the cutter blades for undercut working swing according to the displacement of the control rod and project into the diametrically enlarged direction of the cutter blade. With this operation, together with the rotational motion of the drill bit, a portion near a hole bottom portion of the prepared hole of the straight hole shape previously worked is enlarged in diameter into a skirt shape and is finished into an undercut hole shape.

In this case, the portion near the hole bottom portion is enlarged but the hole depth of the straight hole is not kept at the predetermined depth. The drilling is executed so as to increase the hole depth of the straight hole reached the predetermined depth, and to increase the diameter into the undercut shape. That is, since the undercut working is executed while drilling the straight hole reached the predetermined depth, the drilling operation of the straight hole and the undercut working following thereto are accurately executed in complete synchronicity.

It is preferable in view of the dusts collecting efficiency that an opening position of a dust collecting port, see claim 3, is provided at a tip end surface or a tip end portion outer periphery of the cutter body.

Accordingly, chips generated by drilling are rapidly sucked and discharged from the dust collecting port through a dust collecting passage and a dust collecting adapter in the cutter body to the dust collecting machine. In this case, since the dust collecting adapter attached to the cutter body is relatively rotatable with the cutter body and the rotational motion of the cutter body is smoothly allowed by this arrangement, the attachment of the dust collecting adapter never prevents the drilling operation.

With the invention as claimed in claim 4, the relative movement between the cutter body and stopper sleeve is started when the depth of the straight hole becomes the predetermined depth. At this time, the cutter body during rotation is stayed at the present position. Then, the shank body and the cutter body is relatively rotated, and the shank body pushes the control rod with respect to the cutter body. Therefore, the control rod slidingly displaces, the cutter blades for the undercut working are enlarged in diameter, and a portion near the hole bottom portion of the previously formed straight hole is worked into an undercut shape. That is, the invention as claimed in claim 4 is different from the invention as claimed in claim 2 in view that the portion near the hole bottom portion of the previously formed straight hole is worked into an undercut shape while the depth of the straight hole is kept after it reaches the predetermined depth.

This method is particularly advantageous in the case that automatic dust collecting of chips is not executed. On condition that drilling with the generation of chips by the cutter blade for straight hole is not executed when the depth reaches the predetermined depth, only the working of the undercut is execute by enlarging the cuter blades for undercut working. The reason is that if both of the drilling work by the cutter blade for straight hole working and the drilling work by the cutter blades for undercut working are executed simultaneously, chips chipped by the cutter blade for straight hole working are jammed at the clearance of the cutter blades for undercut working put in the enlarged condition for working the undercut, and therefore it becomes impossible to return the cutter blades for undercut working into the housing condition and draw up from the undercut hole.

With the invention as claimed in claim 5, even in the case that automatic dust collecting for ships like as the invention as claimed in claim 2, at least during the working of the straight hole by the cutter blade for straight hole working, chips chipped by the cutter blade for straight hole working are discharged through the spiral groove portion formed at the cutter body to the opening portion of the straight hole according to the rotation of the cutter body. With this arrangement, there is a merit of a cost down the drill bit as compared with the case of adopting a forcible dust collecting of chips by the dust collecting machine.

### Brief Description of Drawings

Fig. 1 is a view showing a fastener and an exploded view showing a sleeve and a plug which are shown by a half cross section view.
Fig. 2 is a cross-sectional explanatory view showing a connected condition between the sleeve and the plug shown in Fig. 1.
Fig. 3 is a bottom view of Fig. 2.
Fig. 4 is an essential enlarged view of an upper end portion of Fig. 2.
Fig. 5 is an essential enlarged view of a lower end portion of Fig. 2.
Fig. 6 is an explanatory view for a hammering procedure of the fastener shown in Fig. 2.
Fig. 7 is an explanatory view for a hammering procedure of the fastener shown in Fig. 2.
Fig. 8 is a cross-sectional explanatory view of a hammering jig employed in the hammering procedure of the fastener shown in Fig. 2.
Fig. 9 is a plan explanatory view of Fig. 8.
Fig. 10 is a cross-sectional explanatory view along the line a-a of Fig. 8.
Fig. 11 is an operation explanatory view of the jig shown in Fig. 8.
Fig. 12 is a cross-sectional explanatory view along the line b-b of Fig. 11.
Fig. 13 is an operation explanatory view showing actual operation usage of the jig shown in Figs. 8 to 12.
Fig. 14 is an operation explanatory view showing actual operation usage of the jig shown in Figs. 8 to 12.
Fig. 15 is a front view showing a preferred first embodiment of a drill bit for working an undercut hole according to the present invention.
Fig. 16 is a right side view of Fig. 15.
Fig. 17 is a whole cross-sectional view of Fig. 15.
Fig. 18 is a whole cross-sectional view of Fig. 16.
Fig. 19 is an explanatory view showing a relationship between a stopper sleeve and a collar shown in Fig. 17.
Fig. 20 is an enlarged view of an essential part of a cutter body tip end shown in Fig. 17.
Fig. 21 is a bottom view of Fig. 16.
Fig. 22 is an explanatory view showing a detached condition of a cutter blades for undercut working from the cutter body of Fig. 20.
Fig. 23 is an explanatory view of a cutter blade for undercut working alone.
Fig. 24 is a left side view of Fig. 23.
Fig. 25 is a plan view of Fig. 24.
Fig. 26 is an exploded view of the shank body shown in Fig. 17.
Fig. 27 is a plan view of the coupling sleeve shown in Fig. 26.
Fig. 28 is a cross-sectional explanatory view at a cross-section corresponding to the line A-A of Fig. 26.
Fig. 29 is a plan view of the cam follower plate shown in Fig. 26.
Fig. 30 is a right side view of Fig. 29.
Fig. 31 is an operation explanatory view during the drilling by the drill bit shown in Figs. 17 and 40.
Fig. 32 is an enlarged view of an essential part of Fig. 30.
Fig. 33 is a bottom view of Fig. 32.
Fig. 34 is an enlarged cross-sectional view of an essential part showing a modification of the drill bit for undercut working shown in Fig. 20.
Fig. 35 is a view as viewed from the line E-E of the control rod shown in Fig. 34.
Fig. 36 is a bottom view of Fig. 34.
Fig. 37 is an explanatory view of a cutter blade shown in Fig. 34.
Fig. 38 is a front view showing a preferred second embodiment of the drill bit for working undercut hole according to the present invention.
Fig. 39 is a whole cross-sectional view of Fig. 38.
Fig. 40 is an operation explanatory view during the drilling by the drill bit shown in Figs. 38 and 39.
Fig. 41 is an enlarged view of an essential part of Fig. 40.
Fig. 42 is a bottom view of Fig. 41.
Fig. 43 is an explanatory view showing a working pattern of a conventional undercut hole.
Fig. 44 is an explanatory view showing a working pattern of another conventional undercut hole.

### Best Mode for Carrying Out the Invention

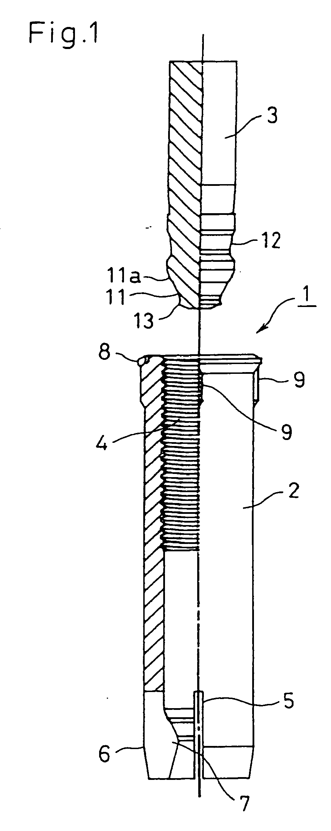

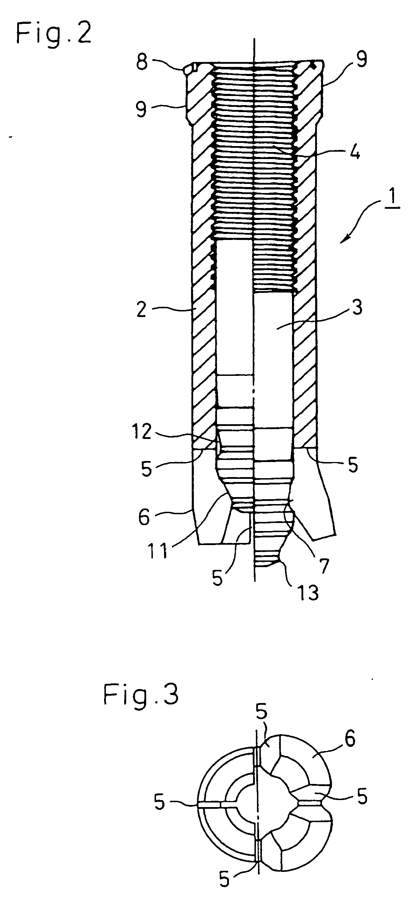

Figs. 1 to 7 are views showing a fastener and show an example called as a metal post-installation anchor of an inner cone hammering type. In Figs. 2 to 5, a left half portion shows a non-expanded condition of an expansion portion, and a right half portion shows an expanded condition.

As shown in Fig. 1 to 3, a fastener 1 is constituted by a hollow cylindrical shaped sleeve 2 and a stepped shaft shaped plug 3 press-fitted into the sleeve 2 as an expanding element.

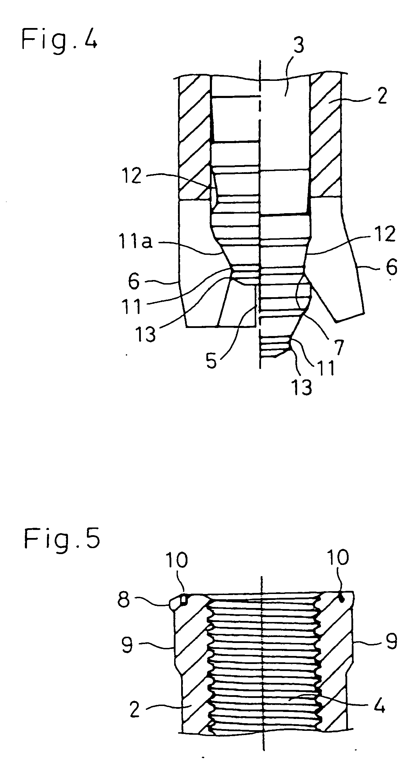

A female screw portion 4 is formed on an inner periphery of an upper end portion of the sleeve 2, ranging in about half of the longitudinal dimension of the sleeve 2. Further, a lower end portion of the sleeve 2 is divided into a collet shape having four radially slotted grooves 5 and is formed into an expansion portion 6 expandable in a radial direction. As enlargedly shown in Fig. 4, a projecting portion 7 is provided at an inner peripheral surface of the expansion portion 6 so as to partially decrease a inner diameter thereof.

As enlargedly shown in Fig. 5, a flange portion 8 is provided at an outer periphery of an upper end portion at the female screw portion 4 of the sleeve 2 with a small protrusion. Further, a plurality of ribs 9 are projectedly provided so as to extend from the flange portion 8 to a general outer peripheral surface of the sleeve 2. Since the flange portion 8 and the ribs 9 are positively press-fitted to an opening edge portion of the prepared hole as mentioned later, a circumferential groove 10 is provided at an inner periphery of the flange portion 8 from the upper end surface thereof as a small annular groove so that the flange portion 8 has a property of easily deforming in the diametrical direction.

On the other hand, the longitudinal dimension of the plug 3 is set at about half of the longitudinal dimension of the sleeve 2, and a recess groove 11 including a taper surface 11a and a recess groove 12 acting as a neck portion and slightly greater than the recess groove 11 are provided at a tip end portion of the plug 3. The recess groove 11 is shaped into a form fitted with the projecting portion 7 formed on the inner periphery of the expansion portion 6 put in the non-expanded condition, and the other groove 12 is shaped into a form fitted with a shape of the projecting portion 7 on the inner periphery of the expansion portion 6 put in the expanded condition. Further, the maximum diameter of a tip end projection 13 of the plug 3 is formed so as to be slightly larger than the minimum inner diameter at a top portion of the projection portion 7 on the inner periphery of the expansion portion 6 put in the non-expanded condition.

Accordingly, by press-fitting the plug 3 into the sleeve 2 in order to assemble the sleeve 2 and the plug 3 by means of the interference fit connection, in addition that the general inner peripheral surface of the sleeve 2 and the general outer peripheral surface of the plug 3 are put in the interference fit condition, the recess groove 11 of the tip end of the plug 3 and the projecting portion 7 of the expansion portion 6 are engaged with each other by means of irregularity engagement so as to perform a detach preventing effect due to the relative positioning. Therefore, even if the fastener 1 in the pre-installation condition is put alone, the sleeve 2 and the plug 3 are not separated from each other.

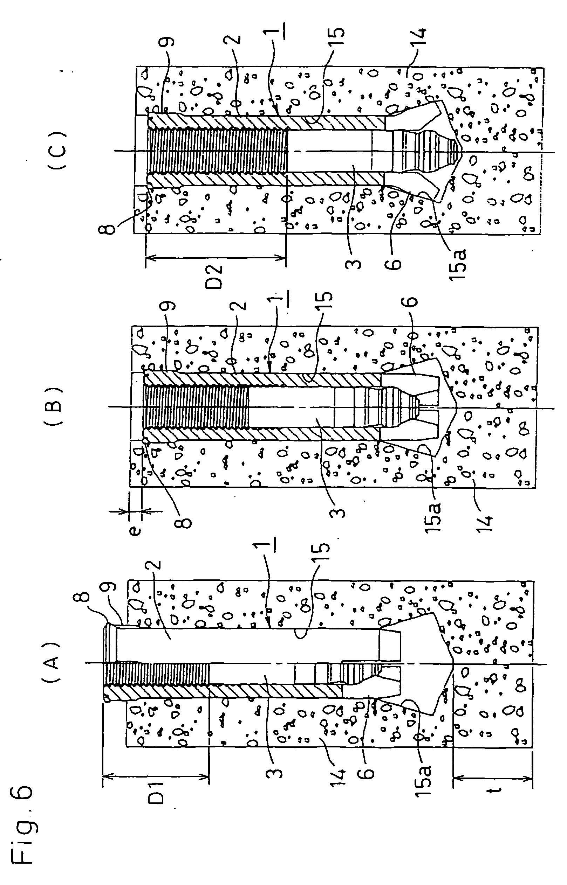

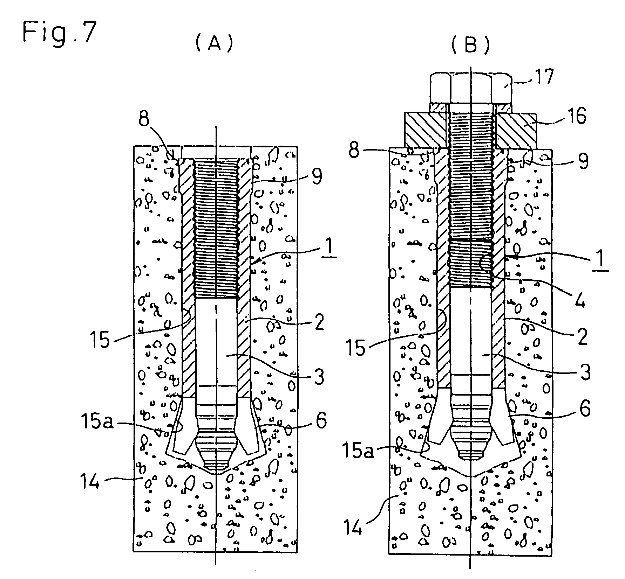

Next, the installation procedure of the fastener 1 will be explained as to a case that a prepared hole of an undercut type is also formed, with reference to Figs. 6 and 7. In this example, it is assumed that a thickness dimension t remained at a bottom wall is small and that the bottom wall can not receive the hammering force of the fastener if an undercut type hole 15 is formed in a concrete structure 14 shown in Fig. 6. Further, it is arranged such that the friction resistance between the outer peripheral surface of the sleeve 2 and the inner peripheral surface of the prepared hole 15 receives the fastener hammering force.

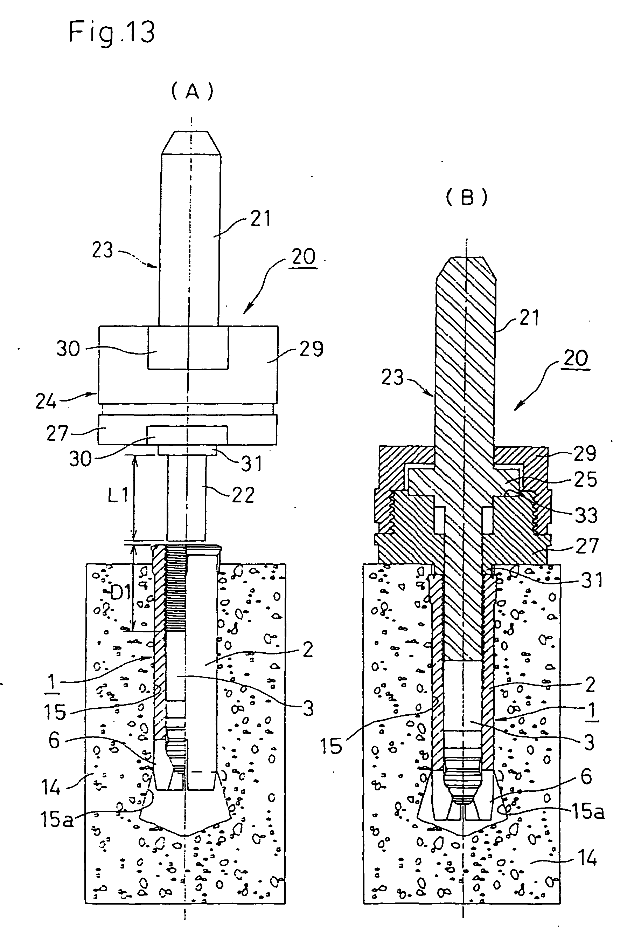

First, after the fastener 1 is inserted into the prepared hole 15 as shown in Fig. 6(A), the sleeve 23 is hammered by hammering operation through a dedicate hammering shaft (hammering jig) shown in Fig. 13 (the hammering jig 22 will be discussed later). At this time, the fastener 1 is hammered until the upper end portion of the sleeve 2 becomes lower in height level than the upper wall surface of the concrete structure 14 by a predetermined quantity e as shown in Fig. 6(B) so that the flange portion 8 and the ribs 9 located at the upper end portion of the sleeve 2 are completely press-fitted. Since the flange portion 8 is arranged to perform an easily deformable property by previously providing the circumferential groove 10 (Refer to Fig. 2 and 5. In these Figures, the left half portion shows a condition that the flange portion is not yet deformed, and the right half portion shows a condition that the flange portion 8 has been deformed.), during the hammered process of the sleeve 2, the flange portion 8 is press-fitted to the prepared hole 15 while being deformed in the diametrical direction. With this manner, even if a portion near the upper end periphery of the prepared hole 15 is not a complete round, the flange portion 8 is deformed so as to follow the shape of the prepared hole 15 and equivalently fitted with the inner peripheral surface of the prepared hole 15. Therefore, it becomes possible to prevent any clearance from being generated between the prepared hole 15 and the sleeve after the installation operation and to prevent rain water and the like from infringing into a clearance therebetween.

Herein, if the prepared hole 15 is finished so that the depth of the prepared hole 15 corresponds to a specific dimension, by controlling the hammering degree of the sleeve 2 so that the above-described dimension e is set at the specific dimension, the tip end of the sleeve 2 does not reach the bottom wall surface of the prepared hole 15.

After the sleeve 2 is hammered by a specific quantity, the tip end of the expansion portion 6 of the sleeve 2 is expanded by hammering the plug 3 by means of the hammering jig 20 similar to that mentioned above as shown in Fig. 6(C) (the hammering jig 20 will be discussed later). At this time, although the sleeve 2 also tends to be hammered due to the friction force generated between the plug 3 and the sleeve 2 according to the hammering of the plug 3, as mentioned above, the flange portion 8 is engaged with the concrete structure 14 in addition that the general outer peripheral surface is fitted with the inner peripheral surface of the prepared hole 15. Therefore, the friction force between the inner peripheral surface of the prepared hole 15 and the sleeve 2 can sufficiently oppose the hammering force of the plug 3, and only the plug 3 is hammered with respect to the sleeve 2.

During a process that the plug 3 is hammered, the convexoconcave engagement between the recess groove 11 of the plug 3 and the projecting portion 7 of the expansion portion 6 is gradually disengaged as shown in Fig. 4, and according to this gradual disengagement, the expansion portion 6 is expanded into a skirt shape along a tapered surface 15a of the prepared hole 15. Then, the other recess groove 12 of the plug 3 is engaged with the projection portion 7 and therefore the relative positioning between the sleeve 2 and the plug 3 is executed. Therefore, the expansion of the expansion portion 6 is completed by reaching this condition. By the engagement between the recess groove 12 and the projecting portion 7, the expansion portion 6 once expanded to the maximum expanded state as shown in Fig. 6(C) is slightly returned due to a so-called spring back phenomenon and is put in the condition shown in Fig. 7(A). Therefore, a builder can momentarily feel that the recess groove 12 is engaged with the projecting portion 7 as an installation feeling, and the hammering operation of the plug 3 is terminated by obtaining the installation feeling regarded that the expansion portion 6 was expanded by the predetermined quantity. If the depth dimension of the prepared hole 15 corresponds to the specific dimension, the tip end of the plug 3 is not contacted with the bottom wall surface of the prepared hole 15 under the expanded condition of the expansion portion 6.

If the expansion of the expansion portion 6 is completed by the hammering of the plug 3, a predetermined fixing structure 16 is set on the concrete structure 15 as shown in Fig. 7(B), and a bolt 17 passing through the fixing structure 16 is screwed to the female screw portion 4 of the sleeve 2 to be fixed with the concrete structure 15. At this time, since the plurality of ribs 9 formed on the outer peripheral surface of the sleeve 3 are engaged with the concrete structure 14 as explained above, this arrangement prevents the sleeve 2 from being rotated together with the bolt 17. According to the tightening of the bolt 17, the sleeve 2 is relatively pulled up and therefore the upper end surface of the sleeve 23 is fitted with the fixing structure 16. Further, the expansion portion 6 previously expanded is fitted with the taper surface 15a of the prepared hole 15. As a result, the expansion portion 6 expanded into a skirt shape and the fixing structure 16 press-fittingly tighten the concrete structure 14. Therefore, it becomes possible to strongly fix the fixing structure 16 with a further strong anchor effect.

When the fastener 1 is put alone in the non-expanded condition, the sleeve 2 and the plug 3 are engaged with each other by the convexoconvave engagement so as to be relatively positioned with each other, in addition to the press-fitting of the plug 3 to the sleeve 3. Therefore, the sleeve 2 and the plug 3 are not separated and are easy to be handled. Further, even when the hammering force cannot be received at the bottom wall surface of the prepared hole 15, it is of course possible to execute the anchor hammering by receiving the hammering force in the friction force between the sleeve 2 and the inner peripheral surface of the prepared hole 15. Further, since the installation feeling caused by the convexoconcave engagement is obtained by expanding the expansion portion 6 through hammering the plug 3 to the specific position, the dispersion of the installation condition due to differences among builders is prevented, and the stable anchor effect is always ensured. Furthermore, by employing the prepared hole 15 of a so-called undercut type in addition to the fastener 1, the tensile strength is further improved.

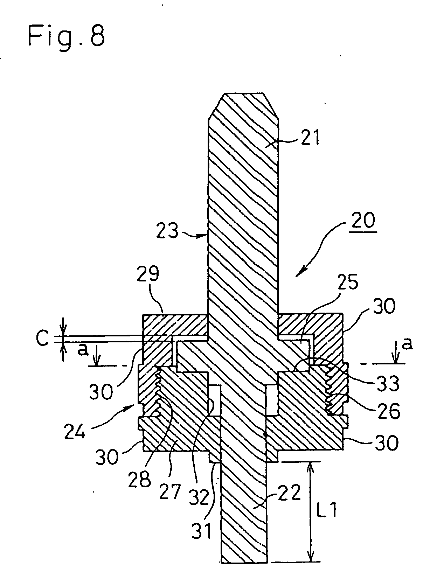

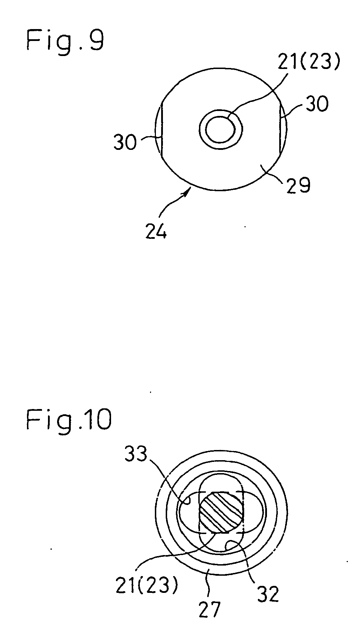

Next, the detail of the jig 20 of Fig. 13 employed in the hammering of the fastener 1, will be explained with reference to Figs. 8 and 9. Herein, the jig 20 is characterized to be commonly adapted to the hammering of the sleeve 2 and the hammering of the plug 3 by changing an effective longitudinal dimension of a punch portion 22 inserted to the sleeve 2.

The jig 20 is generally constituted by a rod 23 integrated so that the punch portion 22 inserted into the sleeve 2 is located on the same axis with a shank portion 21 acting as a grip portion and a hammering input portion, and an adjustable adapter 24 attached to the rod 23.

The shank portion 21 and the punch portion 22 of the rod 23 are both solid cylindrical shapes, the rod 23 is formed into a stepped shaft shape as a whole, and a flange portion (deformed flange portion) 25 of a flat oval or oval shape taking a diameter of the shank portion 21 as a miner axis is integrally formed at the shank portion 21 near the punch portion 22.

On the other hand, the adjust adapter 24 is constituted by a compress-cylindrical case 27 having a male screw portion 26 at its outer peripheral surface and a cup-shaped cover 29 having a female screw portion 28 at its inner peripheral surface. The case 27 is attached to the rod 23 from the punch portion 22, and the cover 29 is attached to the rod 23 from the shank portion 21. Then, both of the case 27 and the cover 29 sandwich the flange portion 25 and are detachably connected with each other through screw portions 26 and 28 thereof. Width across flat portions 30 for tightening and loosening the screw portions 26 and 28 are formed on outer peripheral surfaces of the case 27 and the cover 29. Further, an annular projection 31, which is seated on the sleeve 2 when the sleeve 2 or the plug 3 is hammered, is formed at a lower surface of the case 27.

Different two engagement grooves 32 and 33, which the flange portion 25 is engageble with and detachable from, are formed at an upper surface of the case 27 so as to cross with each other in a plan view direction. More specifically, the first engagement groove 32 having the same shape with the flange portion 25 and a deeper depth and the second engagement groove 33 having the same shape with the flange portion 25 and a shallow depth are provided at the case 27 so that they are sifted by 90° in phase with each other so as to form a cross shape. By rightly rotating or inversely rotating the rod 23 and the adjust adapter 24, one of the two engagement grooves 32 and 33 is selectively engaged with the flange portion 25.

That is, as shown in Fig. 8, when the flange portion 25 is engaged with the shallow depth second engagement groove 33, a distance L1 from the annular projection 31 to the tip end of the punch portion 22 is adjusted to the distance D1 from the upper end surface of the sleeve 2 of the non-expanded fastener 1 shown in Fig. 6(A) to the upper end surface of the plug 3. In this case, a clearance C necessary for releasing the engagement between the second engagement groove 33 and the flange portion 25 is ensured between the flange portion 25 engaged with the second engagement groove 33 and the cover 29. Accordingly, by using the jig 20 set at the condition shown in Fig. 8, the sleeve 2 can be hammered.

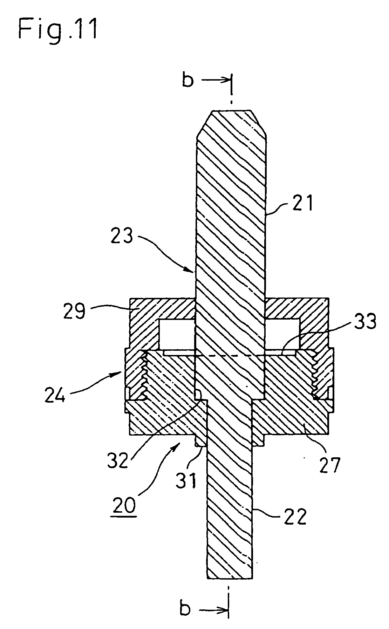

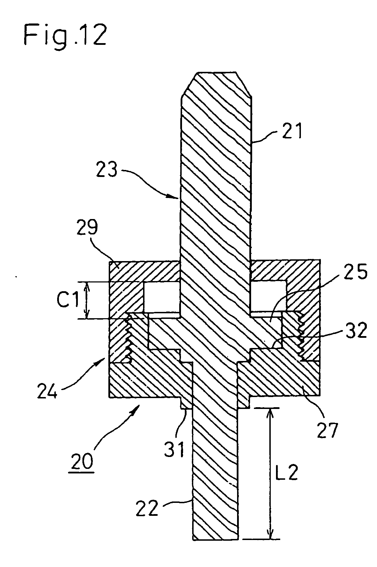

As shown in Figs. 11 and 12, when the flange portion 25 is engaged with the first engagement groove 32 having a deep depth, the distance between the annular projection 31 to the tip end portion of the punch portion 22 is set to correspond with the distance L2 (L1<L2) from the upper end surface of the sleeve 2 of the fastener 1 expanded as shown in Fig. 6(A) to the upper end surface of the plug 3. In this case, a clearance C1 necessary for releasing the engagement between the first engagement groove 32 and the flange portion 25 is ensured between the flange portion 25 engaged with the first engagement groove 32 and the cover 29. Accordingly, by using the jig 20 set at the condition shown in Figs. 11 and 12, the plug 3 can be hammered with respect to the sleeve 2.

Accordingly, when the sleeve 2 is hammered, the flange portion 25 of the jig 20 is engaged with the second engagement groove 33 having the small depth as shown in Fig. 8, and the punch portion 22 is inserted into the sleeve 2 preliminarily set in the prepared hole 15 until the annular projection 31 contacts with the upper end surface of the sleeve 2, as shown in Figs. 13(A) and 13(B). Under this condition, the sleeve 2 is hammered until the case 27 is seated on the concrete structure 14 by applying the hammering strike to the shank portion 21. Since the hammered depth of the sleeve 2 can be controlled by monitoring the seated condition of the case 27, the hammered depth of the sleeve 2 is always maintained at a constant value.

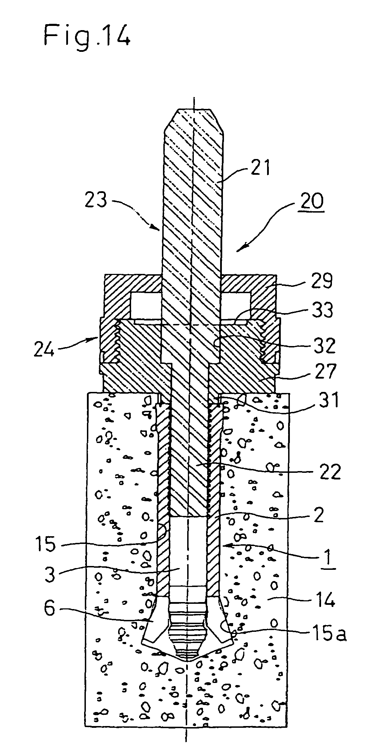

When the plug 3 is hammered following to the hammering of the sleeve 2, the rod 23 is lifted up with respect to the adjust adapter 24 by the clearance C from the condition of Figs. 8 and 13(B), the engagement between the second engagement groove 33 and the flange portion 25 are released, and the flange portion 25 is slightly engaged with the first engagement groove 32 having the deep depth by relatively rotating between the adjust adapter 24 and the rod 23 by 90° (At this time, since the plug 3 is not yet hammered, the flange portion 25 is not put in the fully hammered condition with respect to the first engagement groove 21). After it is recognized that the case 27 is seated on the concrete structure 14, the hammering strike is applied to the shank portion 21 while the engaged condition between the first engagement groove 32 and the flange portion 25 is maintained. Until the flange portion 25 is put in the fully hammered condition with respect to the first engagement groove 32, that is, until the condition shown in Fig. 14, the plug 3 is hammered. In this case, on the basis of the condition that the case 27 is seated to the concrete structure 14 and the flange portion 25 is fully hammered to the first engagement groove 32, the control of the hammering depth of the plug 3 can be executed. Therefore, the hammering depth of the plug 3 and the expanded condition of the expansion portion 6 is always set constant, and the installation condition is further stabilized.

The jig 20 has been shown so as to be commonly employed in the hammering of the sleeve 2 and the hammering of the plug 3, herein. However, since it is possible to properly set the difference of the projection dimensions of the punch portion 22 based on the difference between the depth dimensions of the first and second engagement grooves 32 and 33, it is possible, for example, that as to two kinds of fasteners having different sizes, different sleeves 2 having two kinds of D1 dimensions (refer to Fig. 6 (A)) may be commonly employed for the hammering or different plugs 3 having two kinds of D2 dimensions (refer to Fig. 6 (C)) may be employed for the hammering.

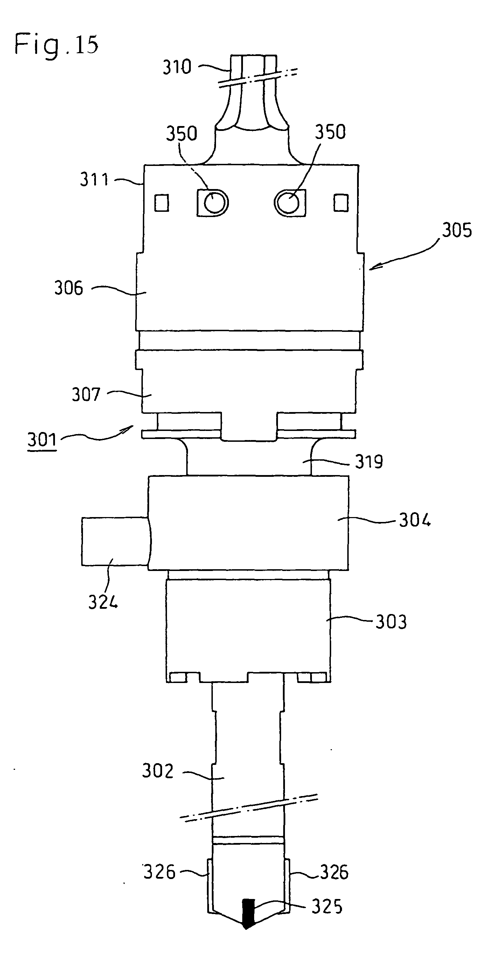

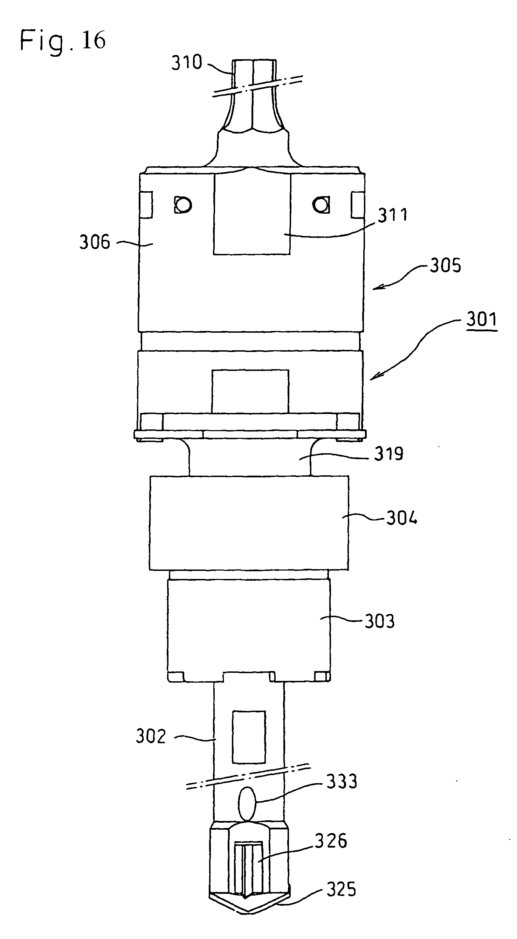

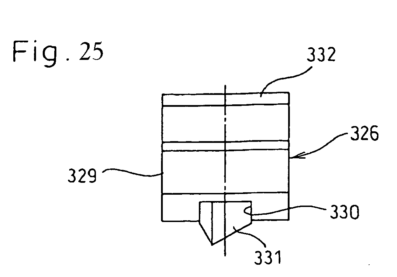

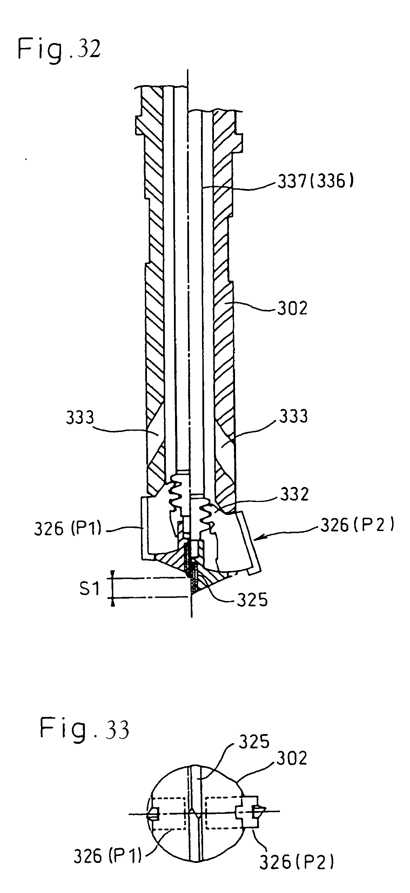

Figs. 15 to 33 are figures showing a preferred first embodiment of a drill bit for working an undercut hole in accordance with the present invention. This embodiment shows an example of a drill bit preferable to form a prepared hole to a concrete structure in the installation of a post-installation anchor of the undercut type.

As shown in Figs. 15 to 18, a drill bit 301 is generally constituted by a hollow cylindrical cutter body 302 having two kinds of cutter blades 325 and 326 as mentioned later, a stopper sleeve 303 and a dust collecting adapter 304 respectively installed to the cutter body 302, and a shank body 305 supporting the cutter body 302.

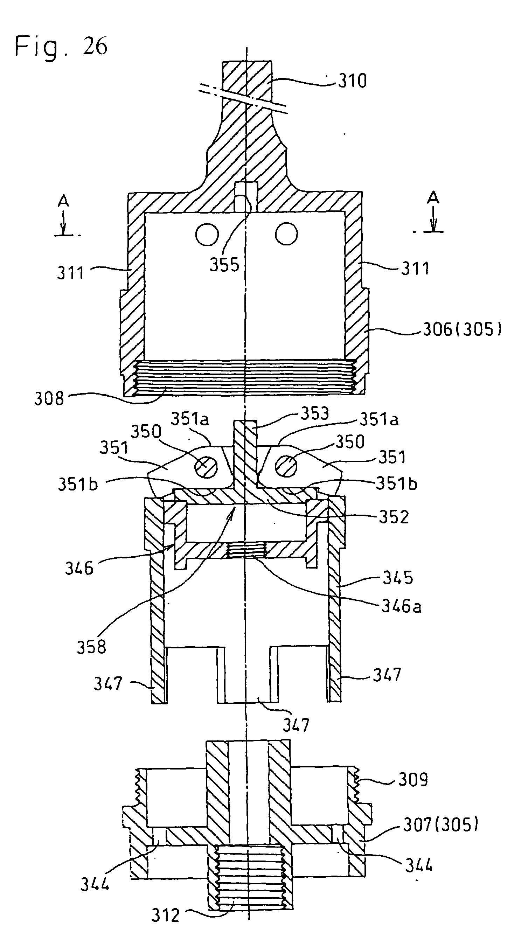

The shank body 305 is formed by a main body 306 of a cup-shape and a coupling sleeve 307 of a double cylindrical shape. By screwing a female screw portion 308 formed at the inner periphery of the main body 306 and a male screw portion 309 formed at the outer periphery of the coupling sleeve 307 with each other, the main body 306 and the coupling sleeve 307 are detachably connected (refer to Fig. 26). At an upper end surface of the main body 306, a hexagonal shank portion 310, which is directly supported to a rotating section of a not-shown drilling machine, is integrally formed. At an outer peripheral surface of the main body 306, a width across flat portion 311 is formed. Since the male screw portion 313 at the upper end of the cutter body 302 is screwed with respect to the male screw portion 312, the cutter body 302 is detachably supported to the shank body 305.

The stopper sleeve 303 and the dust collecting adapter 304 are adjacently disposed through a spacer 314, and these stopper sleeve 303 and dust correcting adapter 304 are restricted in position along the axial direction by the stepped portion 315 of the cutter body 302 and the spacer 315a. However, they are relatively movable in the axial direction within a restricted range and are relatively rotatable.

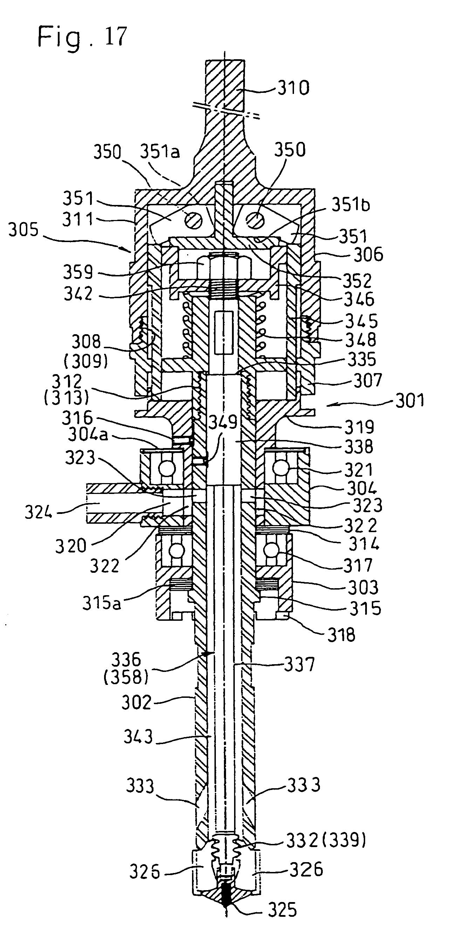

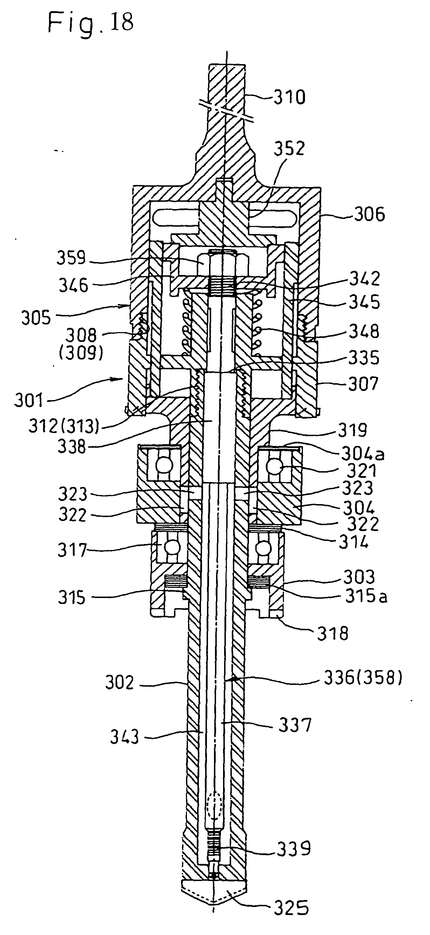

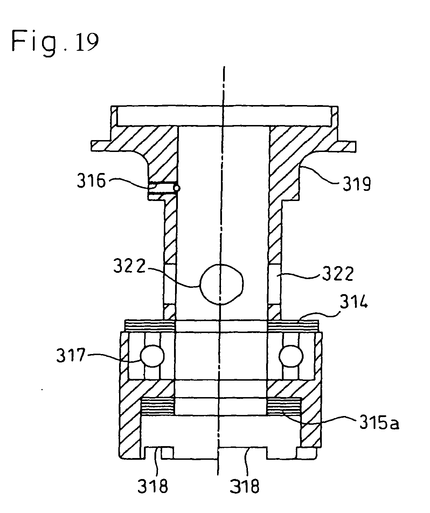

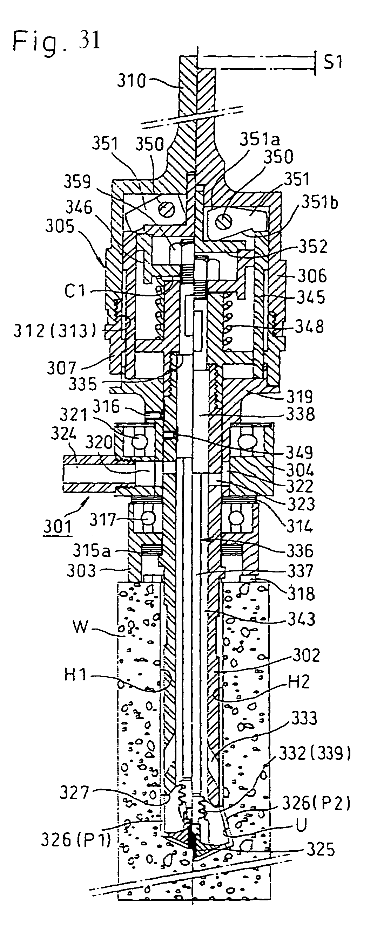

More specifically, as shown in Figs. 17 and 18, the stopper sleeve 303 is supported to the cutter body 302 through a ball bearing 317 so as to be relatively movable to the cutter body 302 and to be relatively movable in the axial direction. A convexoconcave surface 318 of a rectangular saw-tooth shape is formed at the lower end portion thereof as shown in Fig. 19. When the stopper sleeve 303 is set at a lowering limit position limited by the stepped portion 315, a distance from the convexoconcave surface 318 to the tip end of the cutter body 302 is previously controlled according to the hole depth to be formed at a predetermined concrete structure (refer to Fig. 31). When the hole depth machined by the cutter body 302 as mentioned later becomes a predetermined depth, the convexoconcave surface 318 contacts with the concrete structure, and the stopper sleeve 303 together with the dust collecting adapter 304 is relatively and vertically moved with respect to the cutter body 302. The upper surface of the ball bearing 317 is covered with a cover 304a.

A single hole 320, to which a discharge port 324 is connected, is formed at the dust collecting adapter 304, and a collar 319 is installed to the dust collecting adapter 304. Simultaneously, the collar 319 is slidably installed to an inner cylinder portion of the coupling sleeve 307, and a ball bearing 321 is disposed between the collar 319 and the dust collecting adapter 304. With this arrangement, the collar 319 and the dust collecting adapter 304 are relatively rotated, and the dust collecting adapter 304 and the collar 319 are integrally slid when the dust collecting adapter 304 together with the stopper sleeve 303 relatively moves in the axial direction of the cutter body 302.

At a part of the collar 319 and the cutter body 302 located in the dust collecting adapter 304, that is, at a part corresponding to the hole 320, communication holes 322 and 323 are formed at four positions on the circumferential direction by 90° phase, and the communication holes 322 and 323 are communicated with each other. With this arrangement, even if the collar 319 and the cutter body 302 are relatively rotated with respect to the dust collecting adapter 304, the hole 320 is intermittently communicated with the dust collecting passage 343 of the cutter body 302 through the communication holes 322 and 323 and is connected to a not-shown dust collector through a not-shown flexible tube connected to the discharge port 324. A stopper screw 316 acts as a detent of the collar 319 and the cutter body 302.

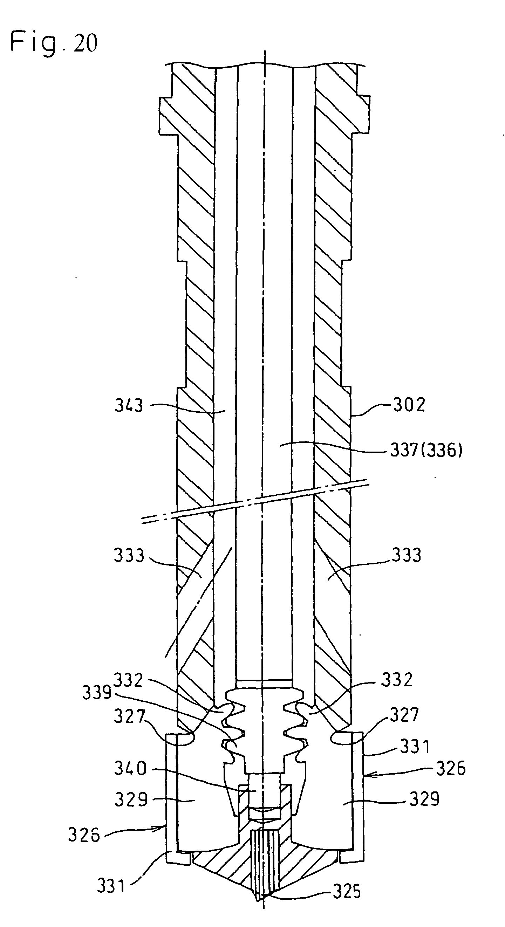

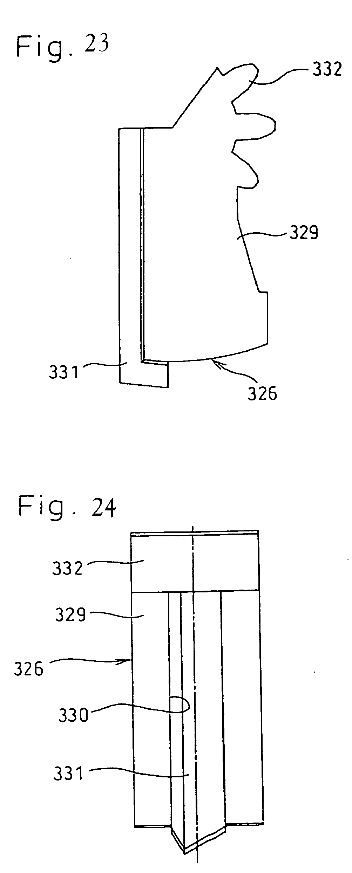

A cutter blade 325 for working a straight hole is attached to the tip end of the cutter body 302 by means of brazing so as to traverse the cutter body 302 in the diametrical direction. Further, movable cutter blades 326 for undercut working are installed to positions opposite with each other through the cutter blade 325 for working a straight hole, that is, to the positions offset by 90° phase with respect to the cutter blade 325 for working the straight hole. That is, as shown in Figs. 20 to 22, rectangular blade receiving grooves 328 having fulcrum top portions 327 of a relative sharp shape are openedly formed at the outer peripheral surface of the lower end portion of the cutter body 302 so as to penetrate the inner peripheral surface of the cutter body 302. The cutter blades 326 for working an undercut are installed to the fulcrum top portions 327 acting as a swing center and are swingably disposed in these blade receiving groove 328 so as to have a relationship of the bilateral symmetry. Each of the cutter blades 326 is, as shown in Figs. 23 to 25, constituted by forming a tip receiving groove 330 to a tip holder 329 of a prism shape and by fixing a tip 331 made of hard metal to the receiving groove 330 by means of brazing. A sector gear 332 is integrally formed at an inner surface of each tip holder 329. Further, the tip 331 has cutting blades at portions corresponding to the tip end surface and the outer peripheral surface of the cutter body 302, respectively.

The sector gear 332 is meshed with a rack portion 339 of a control rod 336 installed in the cutter body 302 as mentioned later. The cutter blades 326 for working an undercut swings between a housing position P1 and a diameter increasing position P2 shown in Fig. 53 according to the slide displacement of the control rod 336. When each cutter blade 326 is positioned at the housing position P1, the cutting blade at the outer peripheral surface of each tip 331 is set so as to be located on a general cylindrical surface of the cuter body 302.

Dust collecting ports 333 are obliquely opened at the outer peripheral surface of the tip end portion of the cutter body 302 while penetrating inner and outer peripheries of the cutter body 302. The dust collecting ports 333 are communicated with a dust collecting passage as mentioned later.

The control rod 336 is, as shown in Figs. 17 and 18, installed in the cutter body 302 so as to be connected to a sholder portion 335 steppedly formed at the upper end of the cutter body 302. The control rod 336 is formed into a stepped shaft shape by a small diameter shaft portion 337 and a large diameter shaft portion 338 on the small diameter shaft portion 337. As shown in Fig. 20, the rack portion 339 is provided at the tip end of the small diameter shaft portion 337 except for a width across flat portion. Further, a guide shaft portion 340 having an extremely small diameter is provided at the tip end of the rack portion 339. The rack portion 339 is meshed with the sector gear 332 of each cutter blade 326 for undercut work, and the guide shaft portion 340 is slidably engaged to a guide hole 341 at the tip end of the cutter body 302. On the other hand, a male screw portion 342 is provided at the upper end of the large diameter shaft portion 338. The male screw portion 342 projects to a position upper than the coupling sleeve 307. The male screw portion 342 is screwed with a female screw portion 346a of an intermediate sleeve 346 mentioned later and is pressingly fixed by means of a lock nut 359.

A dust collecting passage 343 is provided between the small diameter shaft portion 337 of the control rod 336 and the cutter body 302, and the dust collecting passage 343 is communicated with the dust collecting ports 333 mentioned above, and is able to be communicated with a hole 320 of the dust collecting adapter 304 through communication passages 322 and 323 provided in the cutter body 302.

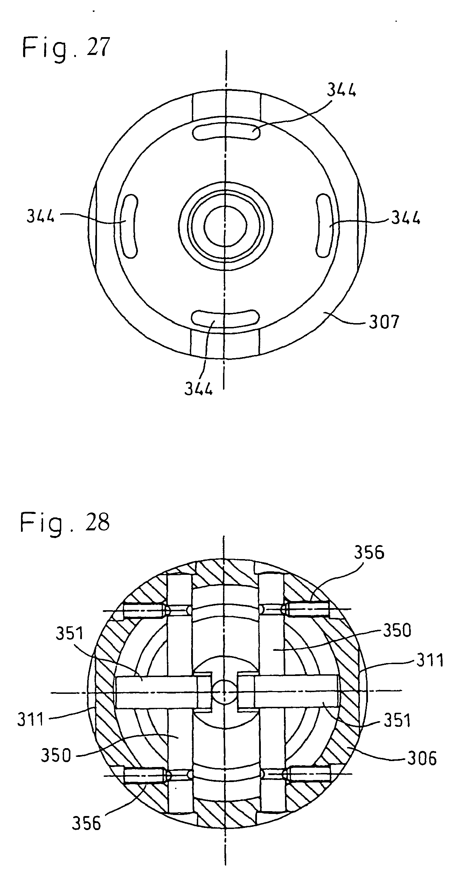

A plurality of guile holes 344 of an ellipse shape are provided at the bottom wall portion of the coupling sleeve 307 forming the shank body 305 shown in Figs. 17 and 18, at equal intervals as shown in Figs. 26 and 27. A cam follower sleeve 345 engaged with the guide holes 344 is slidably installed in the main body 306, and a cup-shaped intermediate sleeve 346 is slidably installed in the cam follower sleeve 345.

More specifically, a plurality of projection portions 347 are formed at the lower end of the cam follower sleeve 345 into a comb shape. By the engagement of these projection portions 347 with the guide holes 344 of the coupling sleeve 307, the relative rotation therebetween is prevented and the relative movement between the shank body 305 and the cam follower sleeve 345 in the axial direction is allowed. Further, the upper end surface of the cam follower sleeve 345 is pressingly contacted with an end portion of cam levers 351 acting as a cam member. A compression coil spring 348 is installed between the intermediate sleeve 346 and the coupling sleeve 307, and always biases the cutter body 302 and the control rod 336 upward. Simultaneously, the cutter body 302 and the control rod 336 are restricted in rotation therebetween by a set screw 349.

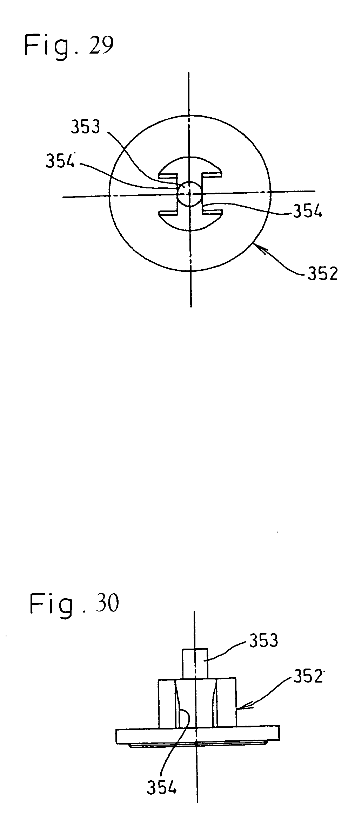

Parallel two shafts 350 are traversed on the inner lower surface of the main body 306 forming the coupling sleeve 307 and the shank body 305, as shown in Figs. 48 and 50 in addition to Fig. 17. Each of cam levers 351 is swingably installed to each of shafts 350. A cam follower plate 352 used in common with both cam levers 351 is disposed under the cam levers 351 so as to be engaged with the upper surface of the intermediate plate 346. Cam guide grooves 354 are formed at a root portion of a shaft portion 353 of the cam follower plate 352, as shown in Figs. 29 and 30. The shaft portion 353 is engaged with a center hole 355 of the main body 306 and receives each cam lever 351 in each cam guide groove 354 so as to be position each cam lever 351 in the axial direction with respect to the shaft 350.

Parallel stopper surfaces 351a and 351b are formed at upper and lower surface of each cam lever 351, and these stopper surfaces 351a and 351b are always in contact with an inner and lower surface of the main body 306 and the cam follower plate 352, so that the condition thereof is maintained by themselves. Accordingly, the cam follower sleeve 345, the cam lever 351, the cam follower plate 352, the intermediate sleeve 346 and the control rod 336 which are the plurality of elements received in the shank body 305, constitute a cutter blade control means 358 for increasing a diameter of the cutter blades for undercut work at the cutter body 302 according to the relative displacement in the axial direction between the cutter body 302 and the stopper sleeve 303 as mentioned later.

Next, there will be explained the procedure in the case that a hole working is executed by using the drill bit 301 arranged hereinabove, with reference to Figs. 31 to 33.

First, in the condition that the drill bit 301 is merely installed to a rotating section of a not-shown drilling machine and no load is not transmitted to the cutter body 302, the condition shown by a left half portion in Figs. 31 to 33 are maintained. That is, since the biasing force directing upward of the compression coil spring 348 is applied to the intermediate sleeve 346 received in the shank body 305, the shaft portion 353 of the cam follower plate 352 is put in a so-called bottom pushing condition with respect to the center hole 355 of the main body 306 (refer to Fig. 26), and a pulling-up force is applied from the control rod 336 and the cutter body 302 steppedly connected with the control rod 336 at the shoulder portion to the shank body 305. As a result, the condition of the left half portion in Fig. 31 is maintained, and simultaneously the cutter blades 326 for undercut work is stayed in the housing position P1. At this time, a small clearance C1 is ensured between the cam follower plate 346 and an upper end surface of the inner cylinder portion of the coupling sleeve 307.

When the hole working is started by rotating the drill bit 301 and pressing the tip end of the cutter body 302 to concrete structure W, the hole working is gradually proceeded by the cutter blade 325 for straight-hole working, and a straight hole H1 having a diameter of the maximum diameter of the cutter blade 325 is worked. At this time, since the cutter blades 326 for undercut working are put in the housing position P1, they do not relate the working of the straight hole H1 directly and merely act as a guide for hole working direction. Since the dust collecting force by a not-shown dust collector is applied to the dust collecting passage 343 through the hole of the dust collecting adapter 304 and the communication passages 322 and 323, chips generated by working the straight hole H1 are rapidly discharged to the dust collector through the dust collector port 333 provided at the top end portion of the cutter body 302. Further, since the dust collecting adapter 304 is relatively rotatable with respect to the cutter body 302 and smoothly allows the rotation of the cutter body 302 rotated, the existence of the dust collecting adapter 304 never prevents the hole working.

Furthermore, the pressing force of the drill bit 301 for hole working is transmitted from the main body 306 forming the shank body 305 to the cutter body 302 connected to the coupling sleeve 307 and the cylinder portion of the coupling sleeve 307 by means of the screw portions 312 and 313. Simultaneously, the reaction force from the hole bottom portion of the straight hole H1 is inputted from the shank body 305 to the drilling machine in the completely inverse route of the above mentioned route, and finally loaded to a builder. Therefore, the cutter body 302 and the control rod 336 are never relatively moved during the hole working of the straight hole H1.

Then, when the depth of the straight hole H1 reaches the predetermined depth, the stopper sleeve 303 contacts with the upper surface of the concrete structure W. If the drill bit 301 is pressed continuously after the stopper sleeve 303 is contacted with the concrete structure, the stopper sleeve 303 together with the dust collecting adapter 304 and the collar 319 upwardly moves with respect to the cutter body 302. The cam follower sleeve 345 also moves upward according to the upward movement of the collar 319, and the cam follower sleeve 345 pushes up the end portion of each cam lever 351 in press contact with the cam follower sleeve 345 and swings the cam levers 351. By swinging the cam levers 351, the stopper surfaces 351a and 351b at the upper and lower surface of the cam levers 351 are gradually separated from the inner lower surface of the main body 306 and the cam follower sleeve 352. According to a stroke by the cam profile, the control rod 336 is pushed down with respect to the cutter body 302 through the cam follower plate 352 and the intermediate sleeve 346. The relative movement stroke between the control rod 336 and the cutter body 302 is absorbed by the previously mentioned clearance C1 between the intermediate sleeve 346 and the inner cylinder portion of the coupling sleeve 307.

By receiving the relative displacement between the cutter body 302 and the control rod 336, each cutter blade 326 for undercut working is swung on the fulcrum top portion 327 due to the engagement between the rack portion 339 and the sector gear 326, and gradually projects from the housing position P1 to the enlarged position H1 as shown by the right half portion in Figs. 31 to 33. By this operation, the depth of the straight hole H1 reached the predetermined depth is further increased, and a portion near the bottom hole portion of the straight hole H1 is increased in diameter by the cutter blades 326 for undercut working and is formed into a taper shape.

That is, it is considered that the left half portions of Figs. 31 to 33 show a condition that the stopper sleeve 303 is just in contact with the concrete structure W, and that the right half portions show a moment that the cutter blades 326 have completely projected to the enlarged position P2 and the undercut working has just finished. During the process that the straight hole H1 reached the predetermined depth is further deeply holed by pressing the cutter body 302 by the stroke S1, the near portion of the hole bottom portion is increased in diameter into an undercut shape as a taper shaped undercut portion U, and the undercut hole H2 having the undercut portion U is formed.

In other words, the undercut working is executed by absorbing the relative movement between the stopper sleeve 303 in contact with the concrete structure W and the cutter body 302 at the shank body 305 and by excessively pressing the control rod 336 by the amount of the cam profile (at most clearance C1) of each cam lever 351 as compared with the cutter body 302.

In order to return the cutter blades 326 for undercut working from the enlarge position P2 to the housing position P1 after the undercut working, the drill bit 301 is slowly drawn up in the same time that the pressing force applied to the drill bit 301 is cancelled. Thereupon the control rod 336 is pushed up through the intermediate sleeve 346 due to the biasing force of the compression coil spring 348, and simultaneously the force is applied to the direction that each cam lever 351 is returned to the initial position. Therefore, each cutter blade 326 for undercut working is gradually returned to the housing position P1, and further the stopper sleeve 303 and the dust collecting adapter 304 are relatively pushed down with respect to the cutter body 302. As a result, it becomes possible to smoothly remove the drill bit 301 from the undercut hole H2 worked.

With the drill bit 301 of the present embodiment, the undercut portion U is autonomously worked by executing the working of the straight hole H1 as is similar to the usual drill holing operation, and by continuously applying the pressing force after the depth of the straight hole H1 becomes the predetermined depth. Therefore, the required undercut hole H2 is worked with a feeling completely the same as that of the usual drill holing operation and by one step without complex movement of the drill bit 301.

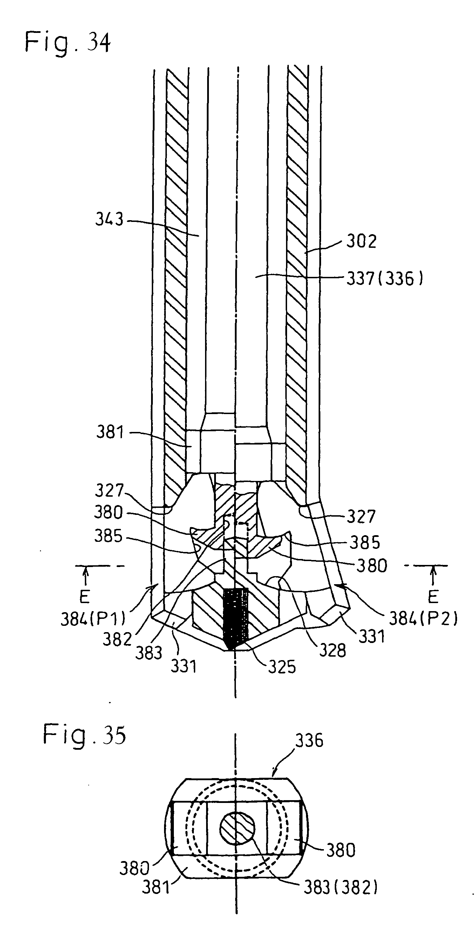

Figs. 34 to 37 show a modification of the drill bit 301. As is clear from the comparison with Fig. 20, the connectional relationship between the small diameter shaft portion 337 of a part of the control rod 336 and cutter blades 384 is different from that of the previous embodiment.

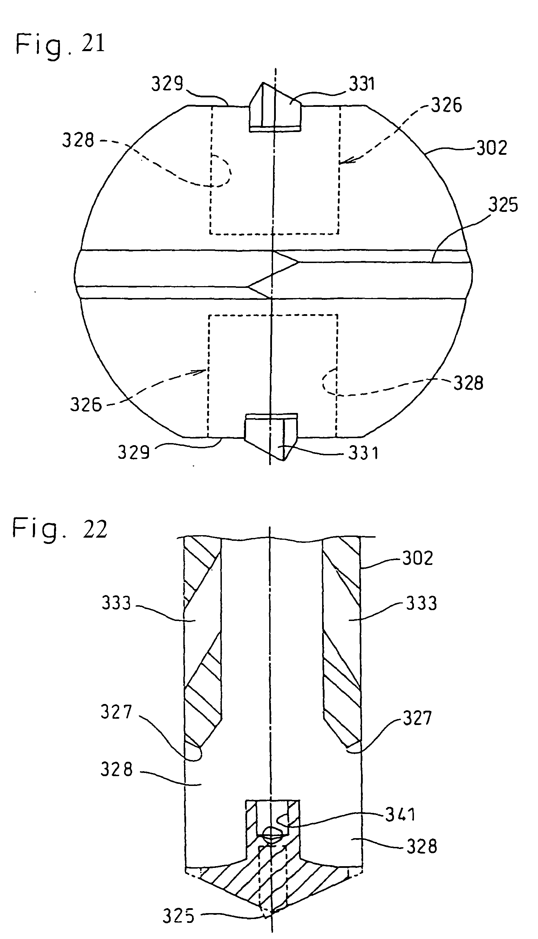

As shown in Figs. 34 to 37, a pair of right and left hooks 380 are projectedly formed at the lower end of the small diameter shaft portion 337 of the control rod 336, and a flange portion 381 of a width across flat shape is integrally formed at the position upper than the hooks 380. A cylindrical surface of the flange portion 381 is in contact with an inner periphery of the cutter body 302. The control rod 336 is vertically movably guided with respect to the cutter body 302 through the flange portion 381 acting as a guide portion. A guide hole 382 is formed at a lower end surface of the small diameter shaft portion 337 providing the hooks 380, and a boss portion 383, which projects from the a bottom wall of the blade receiving groove 328 (refer to Fig. 22) in the cutter body 302 is slidably engaged with the guide hole 382 so as to perform the guiding effect mentioned above.

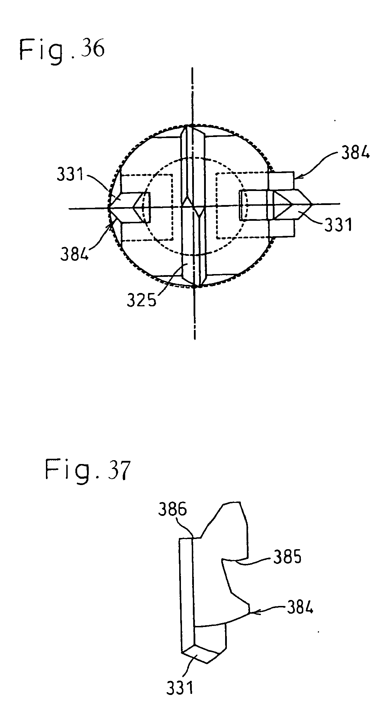

On the other hand, a cutout groove 385 engagable with the hook 380 is formed at each cutter blade 384 for undercut working which is received in the brake receiving groove 328, as shown in Fig. 37, and the cutter blades 384 for the undercut working are supported by engaging the cutout grooves 385 with the hooks 380. That is, as is clear from Fig. 34, by contacting the upper end of each cutter blade 384 for undercut working with the lower surface of the flange portion 381, by connecting the hook 380 and the cutout grooves 385, and by connecting the fulcrum top portion 327 of the cutter body 302 with a shoulder portion 386 (refer to Fig. 37) of the cutter blades 384 for undercut working, the cutter blades 384 for undercut working are swingably supported on the fulcrum tope portion 327 acting as a swing center. As is clear from the same figure, a contact portion between the flange portion 381 and the upper end of each cutter blade 384 for undercut working, a contact portion between the hook 380 and the cutout groove 385, and the fulcrum top portion 327 and the shoulder portion 386 are arranged into a curved-face contact. Therefore, the cutter blades 384 for undercut working are smoothly swung according to the displacement of the control rod 336.

Accordingly, in this modification, by pushing down the control rod 336 in the condition that the cutter blades 384 for undercut working is located at the housing position P1, each cutter blade 384 is swung on the fulcrum top portion 327 acting as a swing center and projects to the enlarged position P2 as shown in the right half portion of the same figure. Further, by raising up the control rod 336 with respect to the cutter body 302, the cutter blades 384 for undercut working are swung in the inverse direction to the above mentioned direction and are returned to the housing position P1 shown in the left half portion in the same figure. Therefore, this modification performs the function as same as that shown in Fig. 20.

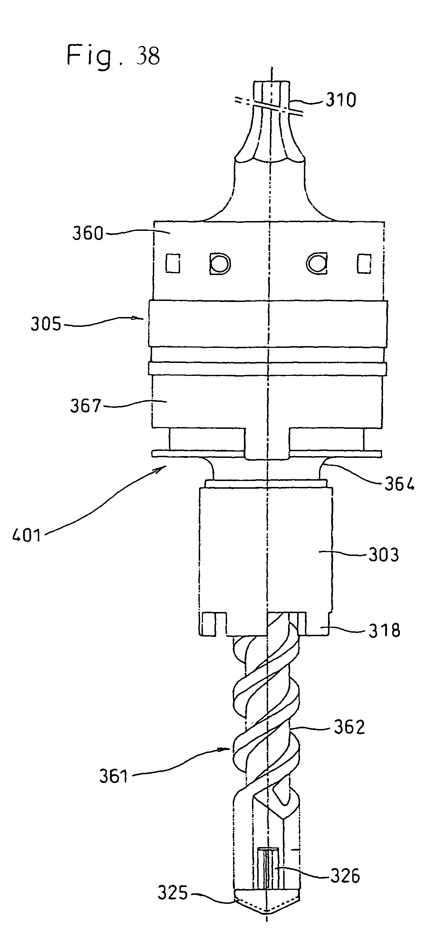

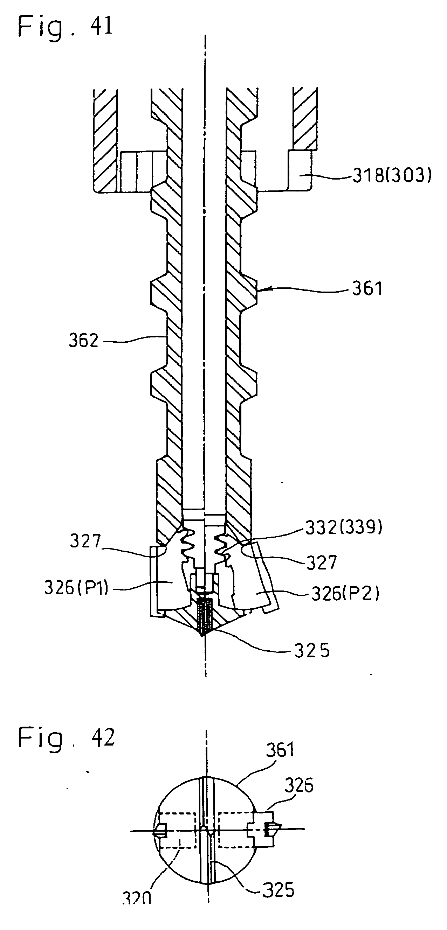

Figs. 38 to 42 show a preferred second embodiment of the drill bit for undercut working according to the present invention. This embodiment is different from the drill bit 301 of the previous embodiment in view that no dust collecting adapter is provided since the forced dust collecting of the chips by means of the dust collecting machine shown in the previous embodiment is not executed and that instead of this, a cutter body having a spiral shaped groove is adopted so as to discharge the chips by the spiral feeding operation of the groove portion according to the rotation of the cutter body. Parts common to those of the first embodiment are denoted by the same reference numerals.

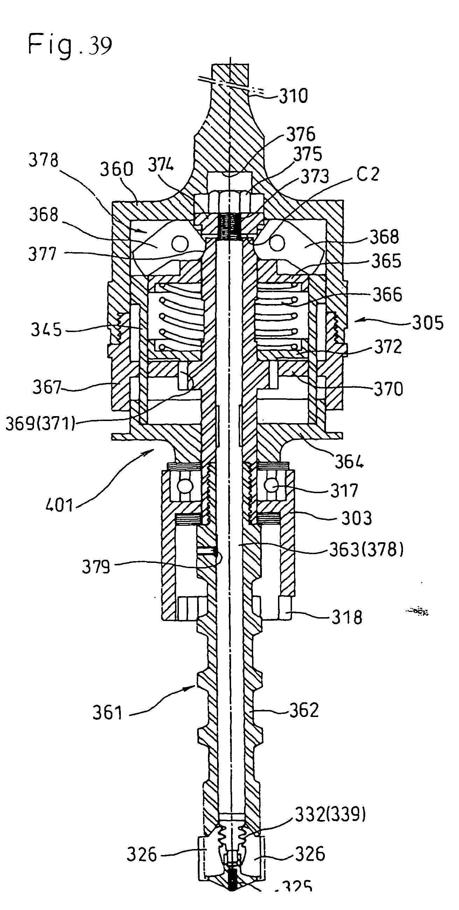

As shown in Fig. 38 and 39, the drill bit 401 is constituted by a cutter body 361 provided with a spiral groove portion positioned at an outer cylinder surface, a control rod 363 slidably installed in the cutter body 361, a stopper sleeve 303 installed to the cutter body 361 so as to be relatively rotatable and relatively movable in the axial direction, and a shank body 305 which is constituted by a body 360 and a coupling sleeve 367 and vertically movably supports the cutter body 361. Except that the stopper sleeve 303 and the collar 364 are adjacently disposed, the interrelationship of the shank body 305 to the collar 364, the cam follower sleeve 345, the cam follower plate 365, the compression coil spring 366 and the cam lever 368 is basically the same as that of the drill bit of the first embodiment. Further, the interrelationship between the cutter blades 325 for straight hole working at the tip end of the cutter body 361 and the cutter blades 326 for undercut working, and the diameter increasing structure due to the engagement between the rack portion 339 at the tip end of the control rod 363 and the sector gear 332 of the cutter blades 326 are basically the same as that of the drill bit 301 of the first embodiment.

A spline 369 is formed at an inner periphery of the coupling sleeve 367 formed at the shank body 305, and a spline 371 is similarly formed at the flange portion 370 integrally formed with the cutter body 361. Since these splines 369 and 371 are engaged with each other, the relation movement between the shank body 305 and the cutter body 361 in the axial direction is allowed and the torque transmission between the shank body 305 and the cutter body 361 is smoothly executed. A spring seat 372 is disposed on the flange portion 370, and a compression coil spring 366 is disposed between the spring seat 372 and the cam follower plate 365.

A stopper 374 is screwed with a male screw portion 373 at the upper end of the control rod 363 so as to ensure a predetermined clearance C2 between the upper end surface of the cutter body 361, and is compressingly tightened by the lock nut 375. Therefore, these stopper 374 and the lock nut 375 are engageable with a stepped center hole 376 of the main body 360. A cutout groove 377 is formed at an upper periphery of the cutter body 361, and a cam lever 368 is connected to the cutout groove 377, so that the shank body 305 and the cutter body are locked with each other to substantially prevent the relative movement between the shank body 305 and the cutter body 361.

As is clear from the above explanation, the cam follower sleeve 345, the cam lever 368, the cam follower plate 365, the stopper 374 and the control rod 363 of the plurality of elements received in the shank body 305 constitute a cutter blade control means 378 for increasing a diameter of the cutter blades 326 for undercut working set at the tip end of the cutter body 361 as mentioned later.

The cutter body 361 and the control rod 363 are allowed in the relative displacement by the clearance C2 and are prevented in the relative rotation by means of the stop screw 378.

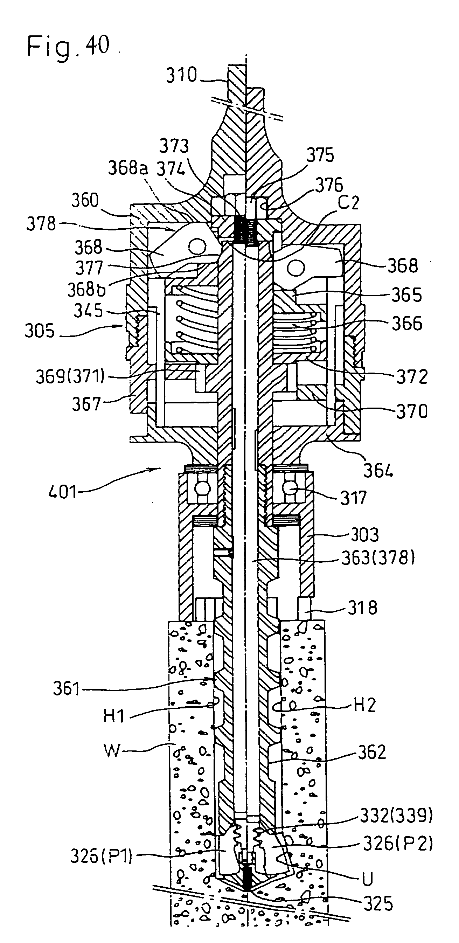

Accordingly, with the drill bit 401 of the present embodiment, under the condition that the drill bit 401 is merely installed to a rotating part of a not-shown drill machine and no load is applied to the cutter body 361, a condition of the left half portion shown in Figs. 40 to 42 is maintained by itself.

That is, since an upwardly directing biasing force of the compression coil spring 366 is applied to the cam follow plate 365 received in the shank body 305, the stopper surfaces 368a and 368b vertically parallel with each other of the cam lever 368 are in press contact with an inner and lower surface of the main body 360 and the upper surface of the cam follower plate 365, respectively. Substantially, the cam lever 368 is connected to the cutout groove 377 of the upper end of the cam follower plate 365, and is sandwiched between the main body 360 and the cam follower plate 365. As a result, the relative movement between the shank body 305 and the cutter body 361 is prevented. With this, the condition of the left half portion of Figs. 40 to 42 are maintained, and simultaneously the cutter blades 326 for undercut working are supported in the housing position P1. At this time, a small clearance C3 is ensured between the stopper 374 and the upper end surface of the cutter body 361.

When the holing operation is started by pressing the tip end of the cutter body 361 to the concrete structure W at the same time of rotating the drill bit 401, the cutter blade 325 for straight hole working set at the tip end of the cutter body 361 gradually holes, and the straight hole H1 having the diameter equal to the maximum diameter of the cutter blade 325 is worked. At this time, the rotation torque of the shank body 305 is transmitted to the cutter body 362 through the inner periphery of the coupling sleeve 367 through the spline engagement portions 369 and 371, and simultaneously the chips generated by the working of the straight hole H1 are discharged to an opening end of the straight hole H1 during the working by the spiral operation of the groove portion 362.

Further, the pressing force of the drill bit 401 for hole working is transmitted from the main body 360 forming the shank body 305 to the cam lever 368 and the cutter body connected with the cam lever 368 through the cutout groove 377, and simultaneously the reaction force of the hole bottom portion of the straight hole H1 formed is inversely inputted from the shank body 305 to the drilling machine and is finally received by the builder. Therefore, during the holing operation for the straight hole H1, there causes no relative movement between the shank body 305 and the cutter body 361 and no relative movement between the cutter body 361 and the control rod 368.

Then, when the depth of the straight hole H1 formed becomes the predetermined depth, the stopper sleeve 303 is contacted with the upper surface of the concrete structure W. That is, it is considered that the condition at the moment that the stopper sleeve 303 is contacted with the concrete structure W corresponds the left half portion shown in Figs. 40 to 42, and that the condition that the undercut working is completed by further pressing the drill bit 401 after the contact to the concrete structure W corresponds to the right half portion of the same figures. By continuously pressing the drill bit 401 even after being contacted with the concrete structure W, the stopper sleeve 303 together with the collar 364 is upwardly moved with respect to the cutter body 361. According to the upward movement of the collar 364, the cam follower sleeve 345 is also upwardly moved, and the cam follower sleeve 303 pushes up the end portion of each cam lever 368 in press contact therewith and swings each cam lever 368. By the swing of the cam levers 368, the cam levers 368 are detached from the cutout grooves 377 of the cutter body 361 and are put in the unlocked condition. This enables the relative movement between the shank body 305 and the cutter body 361.

Hereinafter, the cutter body 361 is merely rotated at the position keeping the predetermined depth of the straight hole H1, and the pressing stroke of the drill bit 401 is absorbed by the relative downward movement of the shank body 305 to the cutter body 361 and the stopper sleeve 303. Even if the shank body 305 is downwardly moved with respect to the cutter body 361, the spline engagement portions 369 and 371 for the inner periphery of the coupling sleeve 367 and the flange portion 370 of the cutter body 361 are still engaged. Therefore, the torque transmission is smoothly executed from the shank body 305 to the cutter body 361.

By downwardly moving the shank body 305 with respect to the cutter body as mentioned above, the stopper 374 of the upper end of the cutter body 361 and the lock nut 375 are gradually pressed with respect to the center hole 376 of the main body 360, and these stopper 374 and lock nut 375 are soon put in the bottom pressing condition. Then, the pressing stroke of the drill bit 401 after the depth of the straight hole reaches the predetermined depth is absorbed by the relative movement between the cutter body 361 and the shank body 305, and the main body 360 directly presses down the control rod 363 by the clearance C2 for seating the stopper 374 and the lock nut 375 with respect to the center hole 376.

By receiving the relative displacement between the cutter body 361 and the control rod 363, each cutter blade 326 for undercut working is swung on the fulcrum top portion 327 acting as a rotation center due to the engagement between the rack portion 339 and the sector gear 332, and gradually projects from the housing position P1 to the enlarging position P2. With this, the near portion of the hole bottom portion of the straight hole H1 reached the predetermined depth is enlarged into a taper shape by means of the cutter blades 326 for undercut working and is formed into the undercut portion U. The pressing down of the control rod 363 with respect to the cutter body 361 is completed at the time that the stopper 374 is contacted with the upper end surface of the cutter body 361 as shown by the right half portion in Fig. 40.

Herein, the reason for executing the undercut working while staying the cutter body 361 at the position of the predetermined depth if the depth of the straight hole H1 reaches the predetermined depth is that in the case that the undercut working is executed together with the working of the straight hole H as is similar to the operation of the drill bit 301 of the first embodiment, the chips cut out by the cutter blade 325 for straight hole working are jammed between the cutter blades 326 for the undercut working operating for the undercut working since no dust collecting by a dust collecting making is executed, and there is a possibility that the cutter blades 326 cannot be returned to the housing position P1 again after the undercut working.

In order to return the cutter blades 326 for the undercut working from the enlarged position P2 to the housing position P1 after the undercut working, by slowly drawing up the drill bit 401 while canceling the pressing force applied to the drill bit 401, the control rod 363 is drawn up by the clearance C2 with respect to the cutter body 361 due to the biasing force of the compression coil spring 366, and each cutter blade 326 for the undercut working is gradually returned to the housing position P1. Simultaneously, the force of the compression coil spring 366 is applied in the direction for returning each cam lever 368 to the initial position. Therefore, the cam levers 368 and the cam follower sleeve 345 are returned to the initial position and the shank body 305 and the cutter body 345 are returned to the condition of the left half portion in Figs. 40 by the relative movement therebetween. With this condition, it becomes possible to smoothly remove the drill bit 401 from the undercut hole H2 worked.

With the drill bit 401 of the present embodiment, it is of course certain that the necessary undercut hole H2 can be worked by one step without executing the complex motion of the drill bit 401, with the feeling as same as that in the normal drill holing operation as is similar to the drill bit 301 of the first embodiment. Further, it is arranged such that the undercut working is executed by the cutter blades 326 for the undercut working while keeping the cutter body 361 at the predetermined depth position if once the depth of the straight hole H1 reaches the predetermined depth. Therefore, even if the forcible dust collecting by the dust collecting machine is not employed, the undercut working can be accurately executed at the portion near the hole bottom portion of the straight hole.

## Claims

1. A drill bit (301, 401) which is installed at a rotating portion of a drilling machine and finishes an undercut type hole by enlarging a portion near a hole bottom portion into a taper shape when a straight hole is drilled to a structure of a drill object by a rotating motion of the drill bit and when a depth of the drilled hole reaches a predetermined depth, the drill bit for working an undercut hole comprising:
- a cutter body (302, 361) providing at least a cutter blade (325) for straight hole working at its tip ends;
- a cutter blade (326) for undercut working that is installed at a tip end portion of the cutter body (362) so as to be swingable and projectable in the diametrical direction and that enlarges a portion near a hole bottom portion of a straight hole into a taper shape by projecting into the diametrical direction through swinging motion;
- a sleeve (303) that is installed to the cutter body (302, 361) so as to be relatively rotatable and that is contacted with a structure when a drilled depth of a straight hole to the structure becomes a predetermined depth;
- a shank body (305) supporting the cutter body (302) so as not to be relatively rotatable, and
- a cutter blade control means (332, 336, 335, 351, 363, 368) for projecting the cutter blade for undercut working into an enlarged direction of the cutter body,
**characterized in that**
said sleeve is a stopper sleeve (303) which is also relatively moveable with respect to the cutter body (302, 361) in axial direction wherein the cutter blade control means is adapted for projecting the cutter blade (326) according to relative displacement in axial direction between the cutter body and the stopper sleeve when the stopper sleeve is further pressed after it is contacted with the structure.

2. The drill bit for undercut hole working as claimed in claim 1 being **characterized in that**
the cutter blade control means (332, 336, 339, 351) is constituted by a sector gear (332) formed at an end portion position of the cutter blade (326) for undercut working which portion is always positioned in the cutter body (302),
a control rod (336) slidably installed in the cutter body (302), a rack portion (339) engaged with the sector gear (332) being formed at a tip end portion of the control rod, and
a cam member (351) that is received in the shank body (305) and directly transmits a drilling press force applied to the shank body to the cutter body (302) when drilling the straight hole, the cam member pressingly controlling the control rod (336) excessive to the cutter body by a predetermined quantity by transmitting the drilling press force to the cutter body, by absorbing the relative displacement between the cutter body and the stopper sleeve (307), and by being swingably displaced after the stopper sleeve is contacted with the structure.

3. The drill bit for undercut hole working as claimed in claim 2 being **characterized in that** a dust collecting port (333) for collecting chips is openingly formed at the tip end portion of the cutter body (302) and is communicated with a dust collecting passage (343) separately formed between the cutter body and the control rod,
and further **in that** the dust collecting passage together with the stopper sleeve (307) is connected to a dust collecting machine through a dust collecting adapter (304) installed to the cutter body (302) so as to be relatively rotatable.

4. The drill bit for undercut hole working as claimed in claim 1 being **characterized in that**
the cutter blade control means (332, 339, 363, 368) is constituted by
a sector gear (332) formed at an end portion position of the cutter blade for undercut working which portion is always positioned in the cutter body,
a control rod (363) slidably installed in the cutter body, a rack portion (339) engaged with the sector gear being formed at a tip end portion of the control rod,
a cam member (368) that is received in the shank body and directly transmits a drilling press force applied to the shank body (305) to the cutter body (361) when drilling the straight hole, the cam member allowing the shank body to directly pressingly controlling the control rod by a predetermined quantity by transmitting the drilling press force to the cutter body, by absorbing the relative displacement between the cutter body and the stopper sleeve, and by being swingably displaced after the stopper sleeve is contacted with the structure.

5. The drill bit (301, 401) for undercut hole working as claimed in claim 4 being **characterized in that** the cutter body (302, 361) is provided at its cylindrical outer peripheral surface with a spiral groove portion.

## Patentansprüche

1. Bohrer (301, 401), welcher in einem Drehabschnitt einer Bohrmaschine eingebaut ist und einen Hinterschnitt durch Vergrößerung eines Bereichs nahe einem Bohrungsbodenbereich in eine konische Form vollendet, wenn eine gerade Bohrung in eine Struktur eines zu bohrenden Objekts durch Drehbewegung eines Bohrers eingebohrt ist und eine Tiefe der Bohrung eine vorbestimmte Tiefe erreicht, wobei der Bohrer zur Herstellung des Hinterschnitts aufweist:
- einen Schneidkörper (302, 361) mit wenigstens einer Schneide (325) an seinem Spitzenende zur Bildung einer gerade Bohrung;
- eine Schneide (326) zum Hinterschnitt, die am Spitzenendbereich des Schneidkörpers (362) so angeordnet ist, dass sie verschwenkbar ist und in eine Durchmesserrichtung vorsteht und einen Bereich nahe einem Bohrungsboden einer geraden Bohrung in konische Form vergrößert durch Vorstehen in Durchmesserrichtung durch die Schwenkbewegung;
- eine am Schneidkörper (302, 361) angebrachten Hülse (303), die drehbar relativ zu einer Struktur und in Kontakt mit dieser Struktur ist, wenn eine Bohrungstiefe der geraden Bohrung in der Struktur eine vorbestimmte Tiefe erreicht;
- einen Schaftkörper (305) zur Lagerung des Schneidkörpers (302), ohne relative Drehbarkeit, und
- eine Schneidensteuereinrichtung (332, 336, 335, 351, 363, 368) zum Vorbewegen der Schneide zur Hinterschnittarbeit in eine Vergrößerungsrichtung des Schneidkörpers,
**dadurch gekennzeichnet,**
**dass** die Hülse eine Stopphülse (303) ist, die ebenfalls relativ bewegbar hinsichtlich des Schneidkörpers (302, 361) in axialer Richtung ist, wobei die Schneidensteuereinrichtung die Schneide (326) entsprechend zur Relativverstellung in axialer Richtung zwischen Schneidkörper und Stopphülse hervorbewegt, wenn die Stopphülse weiter gedrückt wird nach ihrem Kontakt mit der Struktur.

2. Bohrer nach Anspruch 1,
**dadurch gekennzeichnet, dass**
die Schneidensteuereinrichtung (332, 336, 339, 351) gebildet ist durch eine Sektorverzahnung (332) an einem Endabschnitt der Schneide (326) zur Hinterschnittarbeit, welcher Abschnitt immer im Schneidkörper (302) angeordnet ist,
eine Steuerstange (336) gleitend in dem Schneidkörper (302) enthalten ist und ein Zahnabschnitt (339) mit der Sektorverzahnung (332) in Eingriff ist, welcher an einem Endabschnitt der Steuerstange gebildet ist, und
ein Nockenteil (351) in dem Schaftkörper (305) aufgenommen ist und direkt eine Bohrdruckkraft, die auf den Schenkelkörper ausgeübt wird, auf den Schneidkörper (302) überträgt, wenn eine gerade Bohrung gebohrt wird, wobei das Nockenbauteil drückend die Steuerstange (336) exzessiv zum Schneidkörper um einen vorbestimmten Betrag steuert durch Übertragung der Bohrdruckkraft auf den Schneidkörper, durch Aufnehmen der Relativverstellung zwischen Schneidkörper und der Stopphülse (307) und durch Verschwenken nach Kontaktieren der Stopphülse mit der Struktur.

3. Bohrer nach Anspruch 2,
**dadurch gekennzeichnet,**
**dass** eine Staubsammelöffnung (333) zur Sammlung von Splittern im Spitzenbereich des Schneidkörpers (302) geöffnet ist und mit einer Staubsammeldurchführung (343) in Verbindung steht, die getrennt zwischen dem Schneidkörper und der Steuerstange gebildet ist, und weiterhin der Staubsammeldurchlass zusammen mit der Stopphülse (307) mit einer Staubsammelmaschine durch einen Staubsammeladapter (304) verbunden ist, der am Schneidkörper (302) zur relativen Drehung angeordnet ist.

4. Bohrer nach Anspruch 1,
**dadurch gekennzeichnet, dass**
die Schneidsteuereinrichtung (332, 339, 363, 368) durch eine Sektorverzahnung (332) an einem Endabschnitt der Schneide zur Hinterschnittarbeit gebildet ist, welcher Abschnitt immer im Schneidkörper positioniert ist,
eine Steuerstange (363), die gleitend im Schneidkörper installiert ist, einen Zahnabschnitt (339) zum Eingriff mit der Sektorverzahnung aufweist, der am Endbereich der Steuerstange gebildet ist, sowie ein Nockenbauteil (368) aufweist, das in dem Schaftkörper enthalten ist und direkt eine Bohrdruckkraft, die auf den Schaftkörper (305) ausgeübt wird, auf den Schneidkörper (361) überträgt, wenn eine gerade Bohrung gebohrt wird, wobei das Nockenteil eine direkte Drucksteuerung der Steuerstange durch den Schaftkörper um eine vorbestimmte Größe bei Übertragen der Bohrdruckkraft auf den Schneidkörper erlaubt, wobei die relative Verstellung zwischen Schneidkörper und Stopphülse aufgenommen wird und eine verschwenkbare Verstellung nach Kontaktieren der Stopphülse mit der Struktur erfolgt.

5. Bohrer nach Anspruch 4,
**dadurch gekennzeichnet,**
**dass** der Schneidkörper (302, 361) an seiner äußeren zylindrischen Umfangsfläche mit einem Spiralnutabschnitt versehen ist.

## Revendications

1. Foret (301, 401) qui est installé à une partie tournante d'une machine à forer et finit un trou du type contre-dépouillé en élargissant une partie près d'une portion du fond du trou en une forme conique lorsqu'un trou droit est percé dans une structure d'un objet à percer par un mouvement de rotation du foret et lorsqu'une profondeur du trou foré atteint une profondeur prédéterminée, le foret pour usiner un trou contre-dépouillé comprenant:
un corps de coupe (302, 361) comportant au moins une lame de coupe (325) pour l'usinage d'un trou droit à ses extrémités de pointe;
une lame de coupe (326) pour l'usinage de la contre-dépouille qui est installée à une portion d'extrémité de pointe du corps de coupe (362) pour pouvoir pivoter et faire saillie dans la direction diamétrale et qui agrandit une partie près d'une portion de fond d'un trou droit en une forme conique en faisant saillie dans la direction diamétrale par un mouvement oscillant;
un manchon (303) qui est installé sur le corps de coupe (302, 361) pour pouvoir tourner relativement et qui est en contact avec une structure lorsqu'une profondeur forée d'un trou droit dans la structure atteint une profondeur prédéterminée;
un corps de fût (305) supportant le corps de coupe (302) d'une manière non tournante relativement, et
un moyen de commande de lame de coupe (332, 336, 335, 351, 363, 368) en vue d'une projection de la lame de coupe pour l'usinage de la contre-dépouille dans une direction agrandie du corps de coupe,
**caractérisé en ce que**
ledit manchon est un manchon d'arrêt (303) qui est également déplaçable relativement par rapport au corps de coupe (302, 361) dans la direction axiale où le moyen de commande de la lame de coupe est conçu pour la projection de la lame de coupe 326 en accord avec le déplacement relatif dans une direction axiale entre le corps de coupe et le manchon d'arrêt lorsque le manchon d'arrêt est encore soumis à la pression après son contact avec la structure.

2. Foret pour l'usinage d'un trou contre-dépouillé selon la revendication 1, **caractérisé en ce que**
le moyen de commande de lame de coupe (332, 336, 339, 351) est constitué d'un secteur denté (332) formé à une position de portion d'extrémité de la lame de coupe (326) pour l'usinage de la contre-dépouille, ladite portion étant toujours positionnée dans le corps de coupe (302),
une tige de commande (336) installée d'une manière coulissante dans le corps de coupe (302), une portion de crémaillère (339) en prise avec le secteur denté (332) étant formée à une portion d'extrémité de pointe de la tige de commande, et
un élément de came (351) qui est reçu dans le corps de fût (305) et qui transmet directement une force de pression de forage appliquée au corps de fût au corps de coupe (302) lors du forage du trou droit, l'élément de came commandant par pression la tige de commande (336) excessive au corps de coupe selon une quantité prédéterminée en transmettant la force de pression de forage au corps de coupe, en absorbant le déplacement relatif entre le corps de coupe et le manchon d'arrêt (307) et en étant déplacé d'une manière pivotante après que le manchon d'arrêt a été mis en contact avec la structure.

3. Foret pour l'usinage d'un trou contre-dépouillé selon la revendication 2, **caractérisé en ce qu'**un orifice de collecte des poussières (333) pour recueillir les copeaux s'ouvre à la portion d'extrémité de pointe du corps de coupe (302) et est en communication avec un passage de collecte de poussières (343) formé séparément entre le corps de coupe et la tige de commande,
et en outre **en ce que** le passage de collecte de poussières ensemble avec le manchon d'arrêt (307) est relié à une machine de collecte de poussières par un adaptateur de collecte de poussières (304) installé sur le corps de coupe (302) pour pouvoir tourner relativement.

4. Foret pour l'usinage d'un trou contre-dépouillé selon la revendication 1, **caractérisé en ce que**
le moyen de commande de lame de coupe (332, 339, 363, 368) est formé par un secteur denté (332) formé à une position de portion d'extrémité de la lame de coupe pour l'usinage de la contre-dépouille, ladite portion étant toujours positionnée dans le corps de coupe,
une tige de commande (363) installée d'une manière coulissante dans le corps de coupe, une portion de crémaillère (339) en prise avec le secteur denté étant formée à une portion d'extrémité de pointe de la tige de commande.
un élément de came (368) qui est reçu dans le corps de fût et qui transmet directement une force de pression de forage appliquée au corps de fût (305) au corps de coupe (361) lors du forage du trou droit, l'élément de came permettant au corps de fût de commander directement par pression la tige de commande selon une quantité prédéterminée en transmettant la force de pression de forage au corps de coupe, en absorbant le déplacement relatif entre le corps de coupe et le manchon d'arrêt, et en étant déplacé d'une manière oscillante après que le manchon d'arrêt a été mis en contact avec la structure.

5. Foret (301, 401) pour l'usinage d'un trou contre-dépouillé selon la revendication 4, **caractérisé en ce que** le corps de coupe (302, 361) présente à sa surface périphérique cylindrique externe une portion de rainure en spirale.
